# EUROPEAN PATENT APPLICATION

(11) **EP 4 827 104 A1**
(43) Date of publication of application: **21.10.2026**
(21) Application number: 25742244.4
(22) Date of filing: 16.01.2025
(51) Int. Cl.: H04N 23/68, H04N 23/51, H04N 23/54, H04N 23/55, G03B 5/06, G03B 3/10, G03B 13/36

(54) **CAMERA MODULE AND ELECTRONIC DEVICE COMPRISING CAMERA MODULE**

(30) Priority: 16.01.2024 KR 20240006699; 29.02.2024 KR 20240030119
(71) Applicant: Samsung Electronics Co., Ltd., Suwon-si, Gyeonggi-do 16677 (KR)
(72) Inventor: JO, Jiyeon, Suwon-si, Gyeonggi-do 16677 (KR); RHO, Hyungjin, Suwon-si, Gyeonggi-do 16677 (KR); SHIN, Jeongkil, Suwon-si, Gyeonggi-do 16677 (KR); SHIM, Jaekyu, Suwon-si, Gyeonggi-do 16677 (KR); LEE, Jeongyeol, Suwon-si, Gyeonggi-do 16677 (KR)
(74) Representative: HGF
(86) International application number: PCT/KR2025/000929
(87) International publication number: WO 2025/155105

(57) **Abstract**

According to an embodiment of the present disclosure, the camera module may comprise a camera housing including a first portion and a second portion perpendicular to the first portion. In addition, the camera module may include a reflective member including an incident surface and an emission surface perpendicular to the incident surface. In addition, the camera module may include a carrier including a seating portion on which the reflective member is disposed and a first guide groove directed toward the second portion while facing the reflective member. In addition, the camera module may include a middle guide, at least a part of which is disposed between the carrier and the second portion of the camera housing, and which includes a second guide groove corresponding to the first guide groove and a third guide groove facing the second portion. In addition, the camera module may include a base portion disposed on the second portion and including a fourth guide groove corresponding to the third guide groove. In addition, the camera module may include a first OIS magnetic body disposed on the carrier so as to face the first portion. In addition, the camera module may include a second OIS magnetic body disposed on the middle guide so as to face the second portion. In addition, the camera module may include a first OIS magnetic body disposed on the carrier and facing the first portion. In addition, the camera module may include a second OIS magnetic body disposed on the middle guide and facing the second portion. In addition, the camera module may include a first OIS coil (512) disposed on the first portion so as to face the first OIS magnetic body. In addition, the camera module may include a second OIS coil disposed on the second portion so as to face the second OIS magnetic body.

## Description

### [Technical Field]

Various embodiments disclosed herein relate to a camera module and an electronic device including the same.

### [Background Art]

Various electronic devices, such as a smart phone, a tablet PC, a portable multimedia player (PMP), a personal digital assistant (PDA), a laptop personal computer (PC), and wearable devices such as a wrist watch and a head-mounted display (HMD), include a camera and may capture an image by using the camera.

As the number of users who capture an image or a video using an electronic device increases, performance of the camera included in the electronic device is also being improved. For example, when an image is captured using the camera included in the electronic device, in order to obtain a clear image, it may be necessary to adjust a focus of a subject or to correct shake (e.g., hand shake) that may occur when the subject is captured.

A camera module used in an electronic device may include an auto focus (AF) function of automatically adjusting a focus of a lens with respect to a subject and/or an optical image stabilizer (OIS) function of correcting shake occurring in the camera module when an image of a subject is captured. The AF function and the optical image stabilizer function of the camera module may be driven based on an electromagnetic force using a magnet and a coil.

The above information may be provided as related art for the purpose of facilitating an understanding of the disclosure. No assertion or determination is made as to whether any of the foregoing may be considered prior art with respect to the present disclosure.

### [Disclosure of Invention]

### [Solution to Problem]

A camera module may enable high magnification using refraction of light. For example, the camera module may include a reflective member such as a prism or a mirror. Light incident on the reflective member may be transmitted to an image sensor after a path of the light is bent through reflection or refraction.

A camera module using the reflective member may include a base portion, a middle guide, a reflective-system actuator, a lens driver, and an image sensor inside a camera housing.

The reflective-system actuator may include a reflective member and a carrier. In order to correct shake of an image formed on the image sensor due to hand shake, the reflective member may be tilted with respect to the image sensor. For example, the carrier on which the reflective member is disposed may be configured to rotate, with respect to the image sensor, about one of a roll axis and a pitch axis through an actuator (e.g., a coil and a magnet). The middle guide may be configured to rotate, with respect to the image sensor, about the remaining one of the roll axis and the pitch axis through an actuator. The carrier may be interlocked with the middle guide and may rotate in the same direction as the rotation direction of the middle guide.

Meanwhile, when the reflective-system actuator rotates about the roll axis, a gap for rotation of the reflective-system actuator about the roll axis may be required between the reflective-system actuator and the middle guide. The camera module may have a limitation in reducing the gap between the reflective-system actuator and the middle guide.

Further, when the reflective-system actuator rotates about the roll axis to correct image shake, a smile effect, which is an image rotation phenomenon, may occur.

The technical problems to be solved in the disclosure are not limited to the above-described technical problems, and other technical problems not mentioned herein may be clearly understood by those skilled in the art from the following description.

According to an embodiment of the disclosure, a camera module may include a camera housing including a first portion and a second portion perpendicular to the first portion. The camera module may include a reflective member including an incident surface and an exit surface perpendicular to the incident surface. The camera module may include a carrier including a seating portion on which the reflective member is disposed, and a first guide groove opposite to the reflective member and facing the second portion. The camera module may include a middle guide at least partially disposed between the carrier and the second portion of the camera housing, and including a second guide groove corresponding to the first guide groove and a third guide groove facing the second portion. The camera module may include a base portion disposed on the second portion and including a fourth guide groove corresponding to the third guide groove. The camera module may include a first OIS ball positioned between the first guide groove and the second guide groove. The camera module may include a second OIS ball positioned between the third guide groove and the fourth guide groove. The camera module may include a first OIS magnetic member disposed on the carrier and facing the first portion. The camera module may include a second OIS magnetic member disposed on the middle guide and facing the second portion. The camera module may include a first OIS coil disposed on the first portion and facing the first OIS magnetic member. The camera module may include a second OIS coil disposed on the second portion and facing the second OIS magnetic member.

According to an embodiment of the disclosure, a camera module may further include a camera housing including a first portion and a second portion perpendicular to the first portion. The camera module may include a reflective member including an incident surface, an exit surface perpendicular to the incident surface, and a reflective surface connecting the incident surface and the exit surface and inclined at a predetermined angle with respect to a support surface of the camera housing. The camera module may include a carrier including a seating portion on which the reflective member is disposed. The camera module may include a middle guide disposed on the camera housing and at least partially facing the seating portion. The camera module may include a first OIS ball disposed between the carrier and the middle guide. The camera module may include a first OIS magnetic member disposed on the carrier and facing the first portion. The camera module may include a first OIS coil disposed on the first portion and facing the first OIS magnetic member. The carrier may be configured to rotate about an inclined axis parallel to one edge of the reflective surface and inclined at a predetermined angle with respect to the support surface of the camera housing through an electromagnetic force acting between the first OIS magnetic member and the first OIS coil.

According to various embodiments disclosed herein, the carrier on which the reflective member is disposed may rotate, with respect to the image sensor, about a yaw axis and a pitch axis through an actuator (e.g., a coil and a magnet). When the reflective-system actuator rotates about the yaw axis, a gap between the middle guide and the reflective-system actuator may be reduced, compared with a case in which the reflective-system actuator rotates about the roll axis. Accordingly, as a result of a gap between components disposed inside the camera housing being reduced, the size of the camera module may be reduced.

Further, when the reflective-system actuator rotates about the yaw axis, image rotation occurring during image-shake correction may be reduced, compared with a case in which the reflective-system actuator rotates about the roll axis.

Advantageous effects obtainable from the disclosure are not limited to the above-mentioned advantageous effects, and other advantageous effects not mentioned herein will be clearly understood by those skilled in the art from the following description.

### [Biref Description of Drawings]

With regard to the description of the drawings, the same or similar reference signs may be used to designate the same or similar elements.
FIG. 1 is a block diagram of an electronic device in a network environment according to various embodiments of the disclosure.
FIG. 2 is a block diagram illustrating a camera module according to various embodiments.
FIG. 3A is an exploded perspective view of a camera module according to an embodiment of the disclosure.
FIG. 3B is a view illustrating a coupling relationship among the base portion, the middle guide, and the carrier of FIG. 3A.
FIG. 3C is a view illustrating an arrangement relationship between a first OIS magnetic member and a first OIS coil according to an embodiment of the disclosure.
FIG. 4 is a cross-sectional view taken along line A-A of FIG. 3B.
FIG. 5A is a view illustrating a coupling relationship between a first guide groove of the carrier and a second guide groove of the middle guide according to an embodiment of the disclosure.
FIG. 5B is a view illustrating the first guide groove formed in the carrier according to an embodiment of the disclosure.
FIG. 5C is a view illustrating a protrusion located in one of a (1-1)□h guide groove of the carrier and a (2-1)^{th} guide groove of the middle guide according to an embodiment of the disclosure.
FIG. 6A is an exploded perspective view of a camera module according to an embodiment of the disclosure.
FIG. 6B is a view illustrating a coupling relationship among a base portion, a middle guide, and a carrier of FIG. 6A.
FIG. 7A is a cross-sectional view taken along line B1-B1 of FIG. 6B.
FIG. 7B is a cross-sectional view taken along line B2-B2 of FIG. 6B.
FIG. 8A is an exploded perspective view of a camera module according to an embodiment of the disclosure.
FIG. 8B is a view illustrating a coupling relationship among a base portion, a middle guide, and a carrier of FIG. 8A.
FIG. 9A is a cross-sectional view taken along line C1-C1 of FIG. 8B.
FIG. 9B is a cross-sectional view taken along line C2-C2 of FIG. 8B.
FIG. 10A is a perspective view of the carrier illustrated in FIG. 8A.
FIG. 10B is a perspective view of the middle guide illustrated in FIG. 8A.
FIG. 11A is an exploded perspective view of a camera module according to an embodiment of the disclosure.
FIG. 11B is a view illustrating a coupling relationship among a base portion, a middle guide, and a carrier of FIG. 11A.
FIG. 12A is a cross-sectional view taken along line D1-D1 of FIG. 11B.
FIG. 12B is a cross-sectional view taken along line D2-D2 of FIG. 11B.

### [Mode for the Invention]

In the following description, various embodiments of the disclosure will be described with reference to the accompanying drawings. It is to be understood that various embodiments of the disclosure and terms for describing the embodiments are not intended to limit the technical features disclosed herein to specific embodiments, and that the embodiments include various modifications, equivalents, or substitutions of the corresponding embodiments.

In relation to the description of the drawings, similar reference numerals may be used for similar or related components. The singular form of a noun corresponding to an item may include one item or a plurality of items unless the context clearly indicates otherwise.

As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. Such terms as "a first", "a second", "the first", and "the second" may be used to simply distinguish a corresponding element from another, and does not limit the elements in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

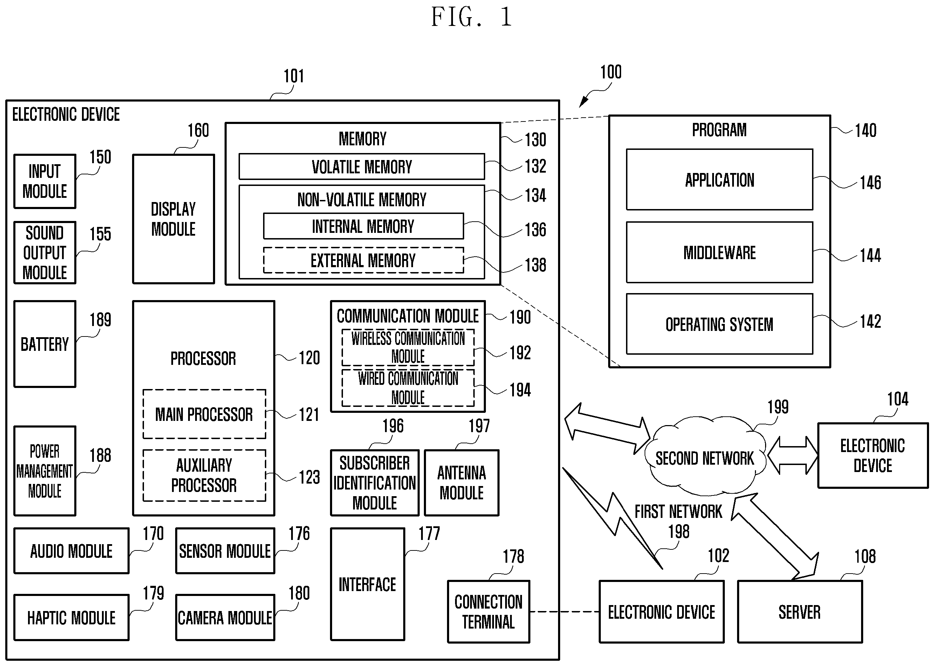

Fig. 1 is a block diagram illustrating an electronic device 101 in a network environment 100 according to various embodiments. Referring to Fig. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module(SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thererto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

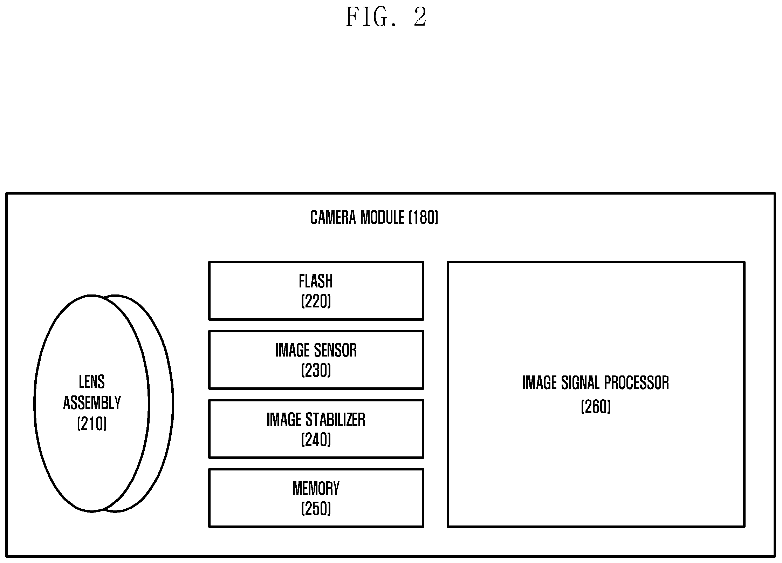

Fig. 2 is a block diagram 200 illustrating the camera module 180 according to various embodiments. Referring to Fig. 2, the camera module 180 may include a lens assembly 210, a flash 220, an image sensor 230, an image stabilizer 240, memory 250 (e.g., buffer memory), or an image signal processor 260. The lens assembly 210 may collect light emitted or reflected from an object whose image is to be taken. The lens assembly 210 may include one or more lenses. According to an embodiment, the camera module 180 may include a plurality of lens assemblies 210. In such a case, the camera module 180 may form, for example, a dual camera, a 360-degree camera, or a spherical camera. Some of the plurality of lens assemblies 210 may have the same lens attribute (e.g., view angle, focal length, auto-focusing, f number, or optical zoom), or at least one lens assembly may have one or more lens attributes different from those of another lens assembly. The lens assembly 210 may include, for example, a wide-angle lens or a telephoto lens.

The flash 220 may emit light that is used to reinforce light reflected from an object. According to an embodiment, the flash 220 may include one or more light emitting diodes (LEDs) (e.g., a red-green-blue (RGB) LED, a white LED, an infrared (IR) LED, or an ultraviolet (UV) LED) or a xenon lamp. The image sensor 230 may obtain an image corresponding to an object by converting light emitted or reflected from the object and transmitted via the lens assembly 210 into an electrical signal. According to an embodiment, the image sensor 230 may include one selected from image sensors having different attributes, such as a RGB sensor, a black-and-white (BW) sensor, an IR sensor, or a UV sensor, a plurality of image sensors having the same attribute, or a plurality of image sensors having different attributes. Each image sensor included in the image sensor 230 may be implemented using, for example, a charged coupled device (CCD) sensor or a complementary metal oxide semiconductor (CMOS) sensor.

The image stabilizer 240 may move the image sensor 230 or at least one lens included in the lens assembly 210 in a particular direction, or control an operational attribute (e.g., adjust the read-out timing) of the image sensor 230 in response to the movement of the camera module 180 or the electronic device 101 including the camera module 180. This allows compensating for at least part of a negative effect (e.g., image blurring) by the movement on an image being captured. According to an embodiment, the image stabilizer 240 may sense such a movement by the camera module 180 or the electronic device 101 using a gyro sensor (not shown) or an acceleration sensor (not shown) disposed inside or outside the camera module 180. According to an embodiment, the image stabilizer 240 may be implemented, for example, as an optical image stabilizer. The memory 250 may store, at least temporarily, at least part of an image obtained via the image sensor 230 for a subsequent image processing task. For example, if image capturing is delayed due to shutter lag or multiple images are quickly captured, a raw image obtained (e.g., a Bayer-patterned image, a high-resolution image) may be stored in the memory 250, and its corresponding copy image (e.g., a low-resolution image) may be previewed via the display module 160. Thereafter, if a specified condition is met (e.g., by a user's input or system command), at least part of the raw image stored in the memory 250 may be obtained and processed, for example, by the image signal processor 260. According to an embodiment, the memory 250 may be configured as at least part of the memory 130 or as a separate memory that is operated independently from the memory 130.

The image signal processor 260 may perform one or more image processing with respect to an image obtained via the image sensor 230 or an image stored in the memory 250. The one or more image processing may include, for example, depth map generation, three-dimensional (3D) modeling, panorama generation, feature point extraction, image synthesizing, or image compensation (e.g., noise reduction, resolution adjustment, brightness adjustment, blurring, sharpening, or softening). Additionally or alternatively, the image signal processor 260 may perform control (e.g., exposure time control or read-out timing control) with respect to at least one (e.g., the image sensor 230) of the components included in the camera module 180. An image processed by the image signal processor 260 may be stored back in the memory 250 for further processing, or may be provided to an external component (e.g., the memory 130, the display module 160, the electronic device 102, the electronic device 104, or the server 108) outside the camera module 180. According to an embodiment, the image signal processor 260 may be configured as at least part of the processor 120, or as a separate processor that is operated independently from the processor 120. If the image signal processor 260 is configured as a separate processor from the processor 120, at least one image processed by the image signal processor 260 may be displayed, by the processor 120, via the display module 160 as it is or after being further processed.

According to an embodiment, the electronic device 101 may include a plurality of camera modules 180 having different attributes or functions. In such a case, at least one of the plurality of camera modules 180 may form, for example, a wide-angle camera and at least another of the plurality of camera modules180 may form a telephoto camera. Similarly, at least one of the plurality of camera modules 180 may form, for example, a front camera and at least another of the plurality of camera modules180 may form a rear camera.

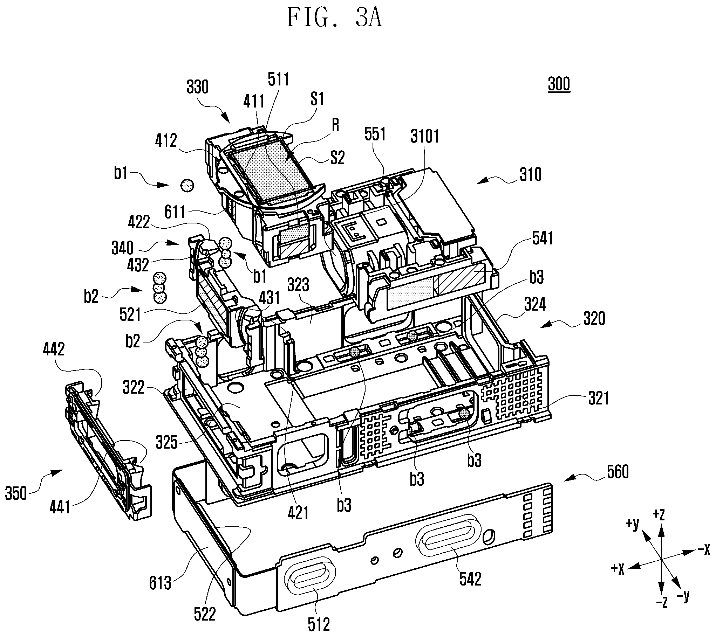

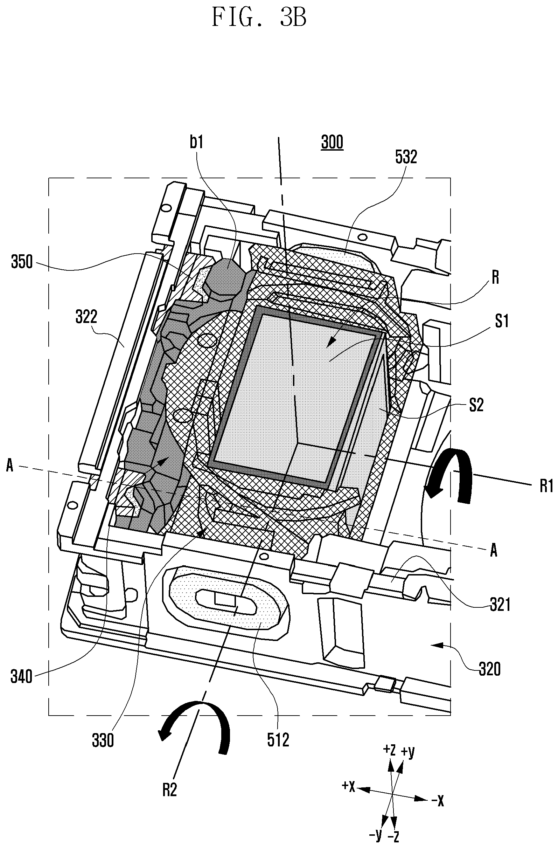

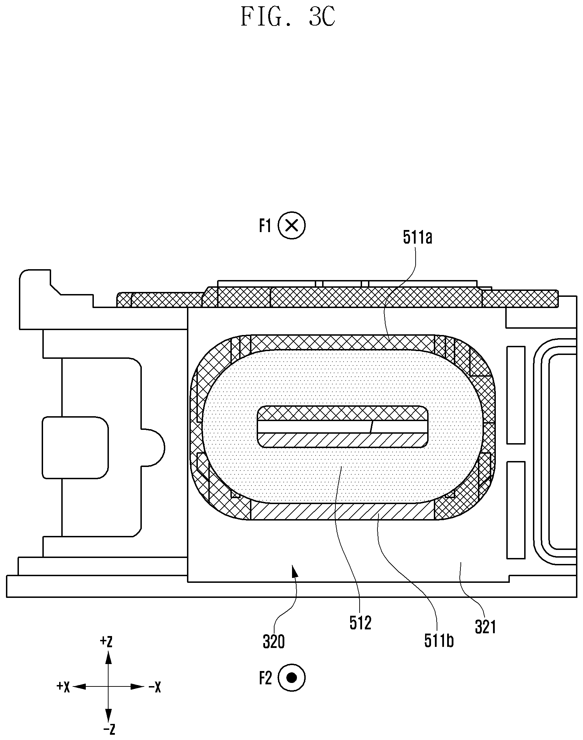

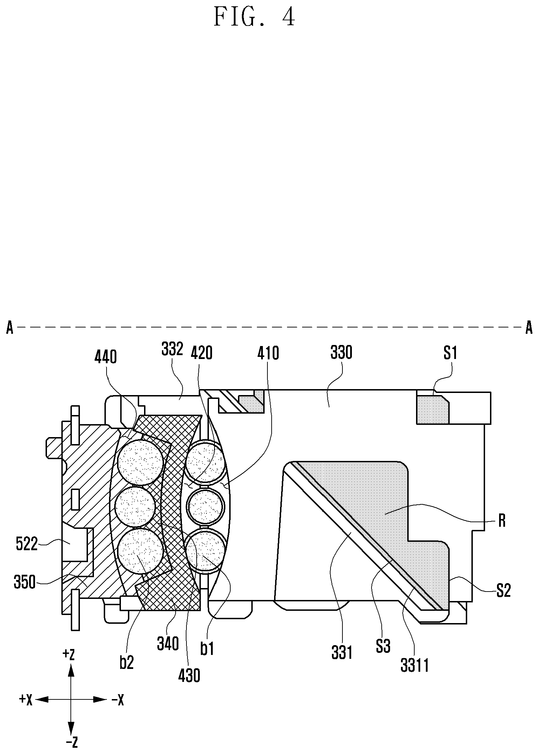

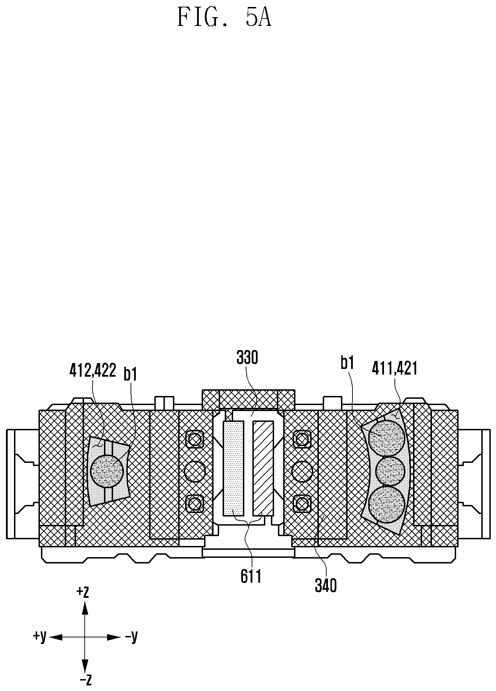

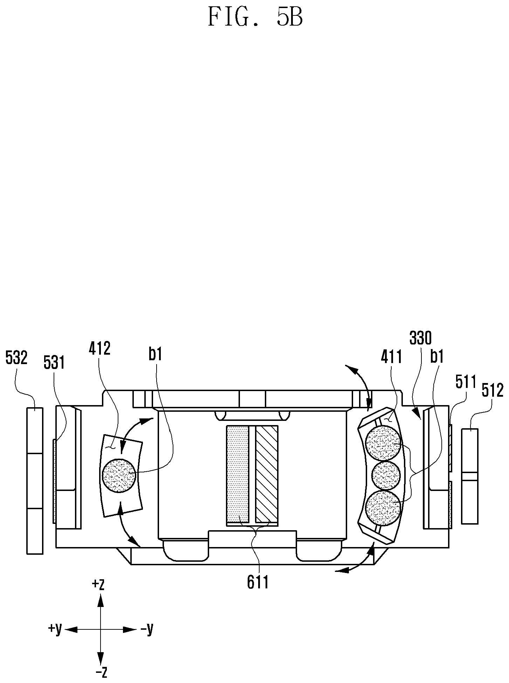

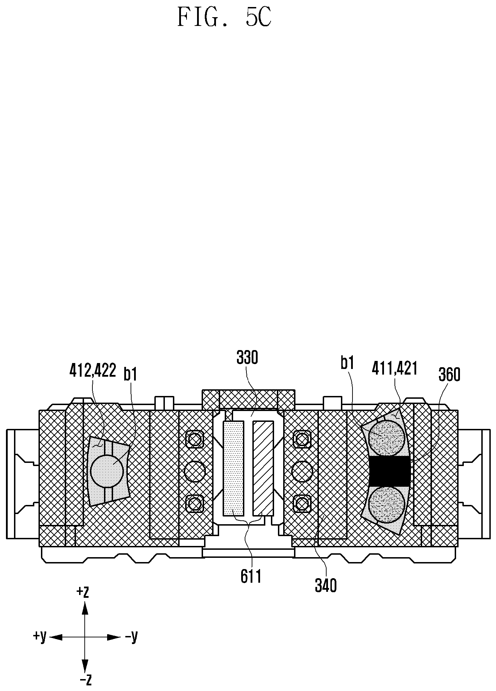

FIG. 3A is an exploded perspective view of a camera module according to an embodiment of the disclosure. FIG. 3B is a view illustrating a coupling relationship among the base portion, the middle guide, and the carrier of FIG. 3A. FIG. 3C is a view illustrating an arrangement relationship between a first OIS magnetic member and a first OIS coil according to an embodiment of the disclosure. FIG. 4 is a cross-sectional view taken along line A-A of FIG. 3B. FIG. 5A is a view illustrating a coupling relationship between a first guide groove of the carrier and a second guide groove of the middle guide according to an embodiment of the disclosure. FIG. 5B is a view illustrating the first guide groove formed in the carrier according to an embodiment of the disclosure. FIG. 5C is a view illustrating a protrusion located in one of a (1-1)□h guide groove of the carrier and a (2-1)□h guide groove of the middle guide according to an embodiment of the disclosure.

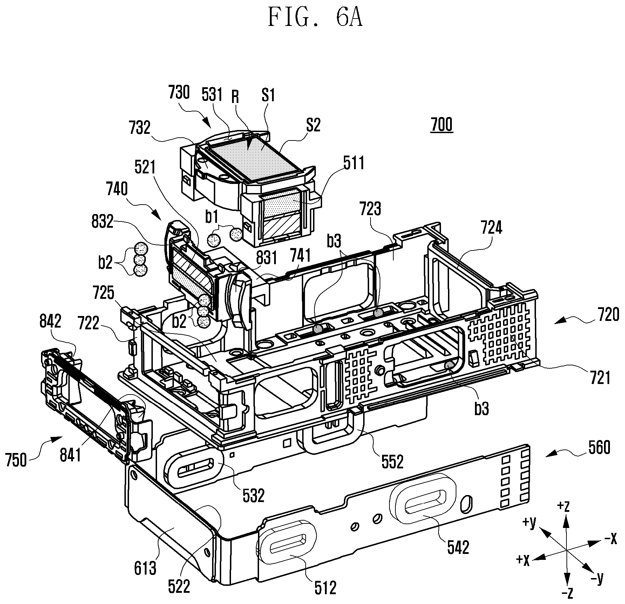

According to an embodiment, as illustrated in FIGS. 3A and 3B, a camera module 300 may include a camera housing 320, a reflective-system actuator (e.g., a reflective member R and a carrier 330), a middle guide 340, a base portion 350, a lens driver 310, a flexible printed circuit board 560, a first OIS actuator (e.g., the first OIS magnetic member 511 and the first OIS coil 512 of FIG. 3A), a second OIS actuator (e.g., the second OIS magnetic member 521 and the second OIS coil 522 of FIG. 3A), a third OIS actuator (e.g., the third OIS magnetic member 531 and the third OIS coil 532 of FIG. 3A), a first AF actuator (e.g., the first AF magnetic member 541 and the first AF coil 542 of FIG. 3A), a second AF actuator (e.g., the second AF magnetic member 551 of FIG. 3A and the second AF coil 552 of FIG. 6A), first OIS balls b1, second OIS balls b2, and/or AF balls b3. At least one of the above-described components may be omitted, or at least one component may be added. In an embodiment, at least one of the first OIS actuator 511, 512 and the third OIS actuator 531, 532 may be omitted.

In an embodiment, referring to FIGS. 3A and 3B, the reflective-system actuator, the middle guide 340, the base portion 350, the lens driver 310, and an image sensor (e.g., the image sensor 230 of FIG. 2) may be disposed in the camera housing 320. In an embodiment, the base portion 350, the middle guide 340, the reflective-system actuator, the lens driver 310, and the image sensor 230 may be disposed in the camera housing 320 in this order.

According to an embodiment, as illustrated in FIGS. 3A and 3B, the camera module 300 (e.g., the camera module 180 of FIG. 1) may enable high magnification using refraction of light. In an embodiment, light incident on the camera module 300 may be refracted or reflected through the reflective-system actuator so that the path of the light is changed, and then may pass through the lens driver 310 and enter the image sensor 230.

According to an embodiment, as illustrated in FIGS. 3A and 3B, the reflective-system actuator may include a reflective member R and a carrier 330 on which the reflective member R is seated. In an embodiment, the reflective member R may include a component configured to refract or reflect a path of light, such as a prism or a mirror. In an embodiment, the reflective member R may be disposed on a seating portion (e.g., the seating portion 331 of FIG. 4) of the carrier 330 and may rotate together with the carrier 330 with respect to the image sensor 230 and the camera housing 320 based on an operation of an OIS actuator (e.g., the first OIS actuator 511, 512, the second OIS actuator 521, 522, or the third OIS actuator 531, 532).

In an embodiment, referring to FIG. 4, the reflective member R may include an incident surface S1 on which light is incident, a reflective surface S3 on which the light is reflected or refracted, and an exit surface S2 through which the incident light exits. In an embodiment, the incident surface S1 and the exit surface S2 may be substantially perpendicular to each other. In an embodiment, the reflective surface S3 may connect the incident surface S1 and the exit surface S2, and may be a surface at least partially facing a seating portion 331 of the carrier 330. In an embodiment, light incident on the incident surface S1 of the reflective member R may be reflected by the reflective surface S3, pass through the exit surface S2, and enter the image sensor 230 through the lens 3101 of the lens driver 310.

In an embodiment, the reflective-system actuator may be disposed in the camera housing 320 so as to be rotatable with respect to the image sensor 230. In an embodiment, the carrier 330 may be configured to rotate with respect to the camera housing 320 about a first axis R1 (e.g., the X-axis or yaw axis of FIG. 3B) and a second axis R2 (e.g., the Y-axis or pitch axis of FIG. 3B) through the first OIS actuator 511, 512, the second OIS actuator 521, 522, and/or the third OIS actuator 531, 532, so as to perform an optical image stabilizer (OIS) function of correcting shake occurring in the camera module 300. For example, referring to FIG. 3B, the carrier 330 may be configured to rotate with respect to the camera housing 320 about the first axis R1 (e.g., the X-axis or yaw axis of FIG. 3B) through the first OIS actuator 511, 512 and/or the third OIS actuator 531, 532. The carrier 330 may rotate about the second axis R2 (e.g., the Y-axis or pitch axis of FIG. 3B) through the second OIS actuator 521, 522.

According to an embodiment, as illustrated in FIG. 4, the carrier 330 may include a seating portion 331 on which the reflective member R is disposed. In an embodiment, the seating portion 331 may include a groove having a shape corresponding to the carrier 330. In an embodiment, the seating portion 331 may include an inclined surface 3311 facing the reflective surface S3 of the carrier 330. In an embodiment, the inclined surface 3311 may be substantially parallel to the reflective surface S3. In an embodiment, the reflective surface S3 of the reflective member R may be a surface inclined at a predetermined angle with respect to a support surface 325 of the camera housing 320. As the inclined surface 3311 is substantially parallel to the reflective surface S3, the inclined surface 3311 may form a predetermined angle with the support surface 325 of the camera housing 320.

In an embodiment, referring to FIGS. 3A, 3B, and 5A, the middle guide 340 may be at least partially disposed between the carrier 330 and a portion of the camera housing 320 (e.g., the second portion 322). The middle guide 340 may guide rotation of the carrier 330 about the first axis R1 (e.g., the X-axis or yaw axis of FIG. 3B) perpendicular to the exit surface S2 of the reflective member R.

In an embodiment, referring to FIG. 4, the first guide groove 410 formed in the carrier 330 and the second guide groove 420 formed in the middle guide 340 may face each other. In an embodiment, the first guide groove 410 and the second guide groove 420 may be formed in shapes that allow the carrier 330 to rotate about the first axis R1 with respect to the middle guide 340. For example, referring to FIGS. 5A and 5B to be described later, the first guide groove 410 and the second guide groove 420 may be portions of a virtual circle (e.g., a circle on the YZ plane of FIG. 5A) perpendicular to the first axis R1 perpendicular to the exit surface S2. In an embodiment, the first guide groove 410 and the second guide groove 420 may have a substantially identical curvature.

In an embodiment, first OIS balls b1, which are bearing balls guiding rotation of the carrier 330 with respect to the middle guide 340, may be disposed in the first guide groove 410 and the second guide groove 420. The carrier 330 may be configured to rotate about the first axis R1 with respect to the middle guide 340 through the first OIS balls b1. In an embodiment, the first OIS balls b1 may move along the first guide groove 410 and the second guide groove 420 based on rotation of the carrier 330 with respect to the middle guide 340.

In an embodiment, referring to FIGS. 3A, 3B, and 4, the base portion 350 may be a relatively fixed object with respect to the middle guide 340. In an embodiment, the base portion 350 may be disposed on a portion of the camera housing 320 (e.g., the second portion 322) so as to face the middle guide 340. In an embodiment, the base portion 350 may guide rotation of the middle guide 340 about a second axis R2 (e.g., the Y-axis or pitch axis of FIG. 3A), the second axis R2 being substantially perpendicular to the first axis R1 and substantially parallel to one edge of the support surface 325 of the camera housing 320. In an embodiment, the second axis R2 may be perpendicular to each of an axis perpendicular to the incident surface S1 of the reflective member R (e.g., the Z-axis of FIG. 3B) and an axis perpendicular to the exit surface S2 (e.g., the X-axis or R1 axis of FIG. 3B). The third guide groove 430 formed in the middle guide 340 and the fourth guide groove 440 formed in the base portion 350 may face each other. In an embodiment, the third guide groove 430 and the fourth guide groove 440 may be formed in shapes that allow the middle guide 340 to rotate about the second axis R2 with respect to the base portion 350. For example, referring to FIGS. 3A and 4, the third guide groove 430 and the fourth guide groove 440 may be portions of a virtual circle on the XZ plane of FIG. 4, the virtual circle being perpendicular to the second axis R2. In an embodiment, the third guide groove 430 and the fourth guide groove 440 may have a substantially identical curvature.

In an embodiment, the second OIS balls b2, which are bearing balls guiding rotation of the middle guide 340 with respect to the base portion 350, may be disposed in the third guide groove 430 and the fourth guide groove 440. The middle guide 340 may be configured to rotate about the second axis R2 with respect to the base portion 350 through the second OIS balls b2. In an embodiment, the second OIS balls b2 may move along the third guide groove 430 and the fourth guide groove 440 based on rotation of the middle guide 340 with respect to the base portion 350.

According to an embodiment, as illustrated in FIG. 3A, the lens driver 310 may be disposed in the camera housing 320 so as to be movable in an optical axis direction of the lens 3101 (e.g., the X-axis direction of FIG. 3A) with respect to the image sensor 230. In an embodiment, the image sensor 230 may be coupled to the camera housing 320 so that the position of the image sensor 230 with respect to the camera housing 320 is fixed.

According to an embodiment, the flexible printed circuit board 560 may be electrically connected to the first AF coil 542, the second AF coil 552, the first OIS coil 512, the second OIS coil 522, and/or the third OIS coil 532 (e.g., the third OIS coil 532 of FIG. 5B). In an embodiment, the flexible printed circuit board 560 may surround an outer side of the camera housing 320. In an embodiment, the flexible printed circuit board 560 may surround the base portion 350 disposed on an outer side of a portion of the camera housing 320 (e.g., the second portion 322).

According to an embodiment, a camera cover (not illustrated) may be located outside the camera housing 320 and may be coupled or fitted to the camera housing 320. According to an embodiment, the camera cover may be located at an outermost side of the camera module 300 and may surround the reflective-system actuator, the lens driver 310, and the flexible printed circuit board 560. In an embodiment, the camera cover may include an opening formed such that a portion of the reflective member R is visually exposed from the camera module 300.

According to an embodiment, the reflective-system actuator, the middle guide 340, the base portion 350, the lens driver 310, and/or the image sensor 230 may be disposed inside the camera housing 320. In an embodiment, the camera housing 320 may have a form in which an upper surface (e.g., in the +Z direction with reference to FIG. 3A) is open so that the reflective-system actuator, the middle guide 340, the base portion 350, the lens driver 310, and/or the image sensor 230 may be inserted. In an embodiment, the camera housing 320 may include a first portion 321, a third portion 323 substantially parallel to the first portion 321, a second portion 322 connecting the first portion 321 and the third portion 323 and substantially perpendicular to the first portion 321 and the third portion 323, and a fourth portion 324 substantially parallel to the second portion 322. In an embodiment, the first portion 321 may have the first OIS coil 512 of the first OIS actuator 511, 512 and the first AF coil 542 of the first AF actuator 541, 542 disposed thereon. In an embodiment, the second portion 322 may have the second OIS coil 522 of the second OIS actuator 521, 522 disposed thereon. In an embodiment, the second AF coil 552 of the second AF actuator (e.g., the second AF coil 552 of FIG. 6A) and/or the third OIS coil 532 of the third OIS actuator 531, 532 may be disposed on the third portion 323. In an embodiment, a portion of the image sensor 230 of the camera module 300 may be disposed on the fourth portion 324.

According to an embodiment, as illustrated in FIG. 3A, the lens driver 310 may include at least one lens 3101, the first AF magnetic member 541 (e.g., a magnet), and the second AF magnetic member 551 (e.g., a magnet). In an embodiment, the lens 3101 may be configured to transmit, to the image sensor 230, light that passes through the incident surface S1 of the reflective member R and is emitted from the exit surface S2 of the reflective member R. In an embodiment, the first AF magnetic member 541 may face the first AF coil 542 disposed on the first portion 321 of the camera housing 320. In an embodiment, the second AF magnetic member 551 may face the second AF coil 552 disposed on the third portion 323 of the camera housing 320.

In an embodiment, the camera module 300 may perform an auto focus (AF) function of automatically adjusting the focus of the lens 3101 with respect to a subject outside the electronic device 101 by moving the lens driver 310 with respect to the image sensor 230 under control of the processor 120. In an embodiment, the lens driver 310 may move with respect to the image sensor 230 along the optical axis OA of the lens (e.g., the X-axis direction of FIG. 3A) through at least one of the first AF actuator 541, 542 and the second AF actuator (e.g., the second AF magnetic member 551 and the second AF coil).

In an embodiment, referring to FIG. 3A, the first AF actuator 541, 542 may include the first AF magnetic member 541 (e.g., a magnet) and the first AF coil 542 connected to the flexible printed circuit board 560. In an embodiment, the second AF actuator may include the second AF magnetic member 551 (e.g., a magnet) and the second AF coil 552 connected to the flexible printed circuit board 560. In addition, the first AF actuator 541, 542 and the second AF actuator may be changed to various configurations capable of moving the lens driver 310 in the optical axis direction of the lens 3101. In an embodiment, the first AF coil 542 and the second AF coil 552 may generate a magnetic force as a current is applied through the flexible printed circuit board 560. The lens driver 310 may automatically adjust the focus of the lens 3101 with respect to a subject by relatively moving in the X-axis direction with respect to the image sensor 230 through an electromagnetic force acting between the first AF magnet and the first AF coil 542 and/or an electromagnetic force acting between the second AF magnet and the second AF coil 552.

According to an embodiment, as illustrated in FIG. 3A, the lens driver 310 may move in the X-axis direction with respect to the camera housing 320 through the AF balls b3, which are bearing balls. In an embodiment, the AF balls b3 may be disposed in a ball guide formed in the camera housing 320 to extend in the X-axis direction (e.g., the X-axis of FIG. 3A). The AF balls b3 may be arranged in the X-axis direction in the ball guide to guide movement of the lens driver 310 with respect to the camera housing 320.

According to an embodiment, as illustrated in FIGS. 3A and 3B, the carrier 330 may be disposed in the camera housing 320 and may rotate about the first axis R1 and the second axis R2 to perform an optical image stabilizer (OIS) function of correcting shake occurring in the camera module 300.

According to an embodiment, as illustrated in FIGS. 3A and 3B, the camera module 300 may correct shake of an image (e.g., perform an optical image stabilizer (OIS) function) by controlling the first OIS actuator 511, 512, the second OIS actuator 521, 522, and/or the third OIS actuator 531, 532 through the processor 120. In an embodiment, the first OIS actuator 511, 512 may include a first OIS magnetic member 511 (e.g., a magnet) disposed on the carrier 330 and facing the first portion 321 of the camera housing 320, and a first OIS coil 512 disposed on the first portion 321 of the camera housing 320 so as to at least partially face the first OIS magnetic member 511 and connected to the flexible printed circuit board. In an embodiment, the second OIS actuator 521, 522 may include a second OIS magnetic member 521 (e.g., a magnet) disposed on the middle guide 340 and facing the second portion 322 of the camera housing 320, and a second OIS coil 522 disposed on the second portion 322 of the camera housing 320 so as to at least partially face the second OIS magnetic member 521and connected to the flexible printed circuit board. In an embodiment, the third OIS actuator 531, 532 may include a third OIS magnetic member 531 (e.g., a magnet) disposed on the carrier 330 and facing the third portion 323 of the camera housing 320, and a third OIS coil 532 disposed on the third portion 323 of the camera housing 320 to at least partially face the third OIS magnetic member 531 and connected to the flexible printed circuit board. In addition, the first OIS actuator 511, 512, the second OIS actuator 521, 522, and the third OIS actuator 531, 532 may be changed to various configurations capable of rotating (or moving) the carrier 330 with respect to the image sensor 230.

According to an embodiment, the processor 120 may rotate the carrier 330 about the first axis R1 and/or the second axis R2 with respect to the image sensor 230 in a direction for canceling movement (e.g., shake and/or hand shake) generated by a user during an imaging process of the electronic device 101 through the camera module 300. The processor 120 of the electronic device 101 may obtain movement information of the electronic device 101 detected by a sensor module of the electronic device 101 (e.g., the sensor module 176 of FIG. 1), and may operate the first OIS actuator 511, 512, the second OIS actuator 521, 522, and/or the third OIS actuator 531, 532 based on the movement information. For example, based on the movement information of the electronic device 101, the processor 120 may operate the first OIS actuator 511, 512, the second OIS actuator 521, 522, and/or the third OIS actuator 531, 532 so that the carrier 330 rotates by a predetermined angle about the first axis R1 and/or the second axis R2 with respect to the image sensor 230 of the camera module 300. Through this, quality of an image acquired through the camera module 300 may be improved. For example, quality of the image may be improved by suppressing shake occurring in the camera module 300 during a process of capturing a video of a subject and/or a process of capturing an image of the subject.

In an embodiment, referring to FIGS. 3A and 3B, the carrier 330 may include a first surface (e.g., a surface oriented in the -Y direction of FIG. 3A) facing the first portion 321 of the camera housing 320, a second surface (e.g., a surface oriented in the +X direction of FIG. 3A) facing the second portion 322 of the camera housing 320, and a third surface (e.g., a surface oriented in the +Y direction of FIG. 3A) facing the third portion 323 of the camera housing 320. In an embodiment, the first surface and the third surface of the carrier 330 may be substantially parallel to each other. In an embodiment, the second surface of the carrier 330 may be substantially perpendicular to the first surface and the third surface. In an embodiment, the first OIS magnetic member 511 may be disposed on the first surface of the carrier 330. The first attraction magnetic member 611 may be disposed on the second surface of the carrier 330. The third OIS magnetic member 531 may be disposed on the third surface of the carrier 330.

According to an embodiment, as illustrated in FIGS. 3A and 3B, the carrier 330 and the reflective member R may rotate (e.g., rotate in the YZ plane of FIG. 3A) with respect to the image sensor 230 about the first axis R1 (e.g., a yaw axis and/or the X-axis of FIG. 3A) through an electromagnetic force acting on the first OIS actuator 511, 512 (e.g., the first OIS magnet 511 and the first OIS coil 512). For example, a current applied from the flexible printed circuit board 560 may flow through the first OIS coil 512. As the current flows through the first OIS coil 512, a magnetic field may be formed, and the carrier 330 and the reflective member R may rotate about the first axis R1 through a Lorentz force acting between the first OIS coil 512 and the first OIS magnet 511. In an embodiment, the carrier 330 and the reflective member R may rotate (e.g., rotate in the XZ plane of FIG. 3A) with respect to the image sensor 230 about the second axis R2 (e.g., a pitch axis and/or the Y-axis of FIG. 3A) through an electromagnetic force acting on the second OIS actuator 521, 522 (e.g., the second OIS magnet 521 and the second OIS coil 522). For example, a current applied from the flexible printed circuit board 560 may flow through the second OIS coil 522. As the current flows through the second OIS coil 522, a magnetic field may be formed, and the carrier 330 and the reflective member R may rotate about the second axis R2 through a Lorentz force acting between the second OIS coil 522 and the second OIS magnet 521. In an embodiment, the carrier 330 and the reflective member R may rotate (e.g., rotate in the YZ plane of FIG. 4B) with respect to the image sensor 230 about the first axis R1 (e.g., a yaw axis and/or the X-axis of FIG. 3A) through an electromagnetic force acting on the third OIS actuator (e.g., the third OIS magnet 531 and the third OIS coil 532). For example, a current applied from the flexible printed circuit board 560 may flow through the third OIS coil 532. As the current flows through the third OIS coil 532, a magnetic field may be formed, and the carrier 330 and the reflective member R may rotate about the first axis R1 through a Lorentz force acting between the third OIS coil 532 and the third OIS magnet 531.

In an embodiment, at least one of the first OIS actuator 511, 512 and the third OIS actuator 531, 532 may be omitted. In an embodiment, the first OIS actuator 511, 512 may be omitted. In this case, the camera module 300 may correct shake of an image as the carrier 330 rotates about the first axis R1 through the third OIS actuator 531, 532 and rotates about the second axis R2 through the second OIS actuator 521, 522. In an embodiment, the third OIS actuator 531, 532 may be omitted. In this case, the camera module 300 may correct shake of an image as the carrier 330 rotates about the first axis R1 through the first OIS actuator 511, 512 and rotates about the second axis R2 through the second OIS actuator 521, 522. In the following description, the camera module 300 will be described on the assumption that the camera module 300 includes the first OIS actuator 511, 512, the second OIS actuator 521, 522, and the third OIS actuator 531, 532. However, the following description may be equally applied to a case in which the camera module 300 includes the first OIS actuator 511, 512 and the second OIS actuator, or a case in which the camera module 300 includes the second OIS actuator 521, 522 and the third OIS actuator 531, 532.

According to an embodiment, the second OIS actuator 521, 522 may be disposed substantially perpendicular to the first OIS actuator 511, 512 and the third OIS actuator 531, 532. In an embodiment, as described above, the second portion 322 of the camera housing 320 may be substantially perpendicular to the first portion 321 and the third portion 323. In this case, the second OIS magnetic member 521 disposed on the middle guide 340 so as to face the second portion 322 of the camera housing 320 may be in a substantially perpendicular positional relationship with the first OIS magnetic member 511 disposed on the first surface of the carrier 330 so as to face the first portion 321 of the camera housing 320 and/or the third OIS magnetic member 531 disposed on the third surface of the carrier 330 so as to face the third portion 323 of the camera housing 320.

According to an embodiment, as illustrated in FIGS. 3A and 3C, the first OIS magnetic member 511 may be disposed on the carrier 330 such that an electromagnetic force acting between the first OIS magnetic member 511 and the first OIS coil 512 acts in a direction of rotation about the first axis R1. For example, the first OIS magnetic member 511 may include a (1-1)□hOIS magnetic member 511a and a (1-2)□h OIS magnetic member 511b disposed along a thickness direction of the camera module 300 (e.g., the Z-axis direction of FIG. 3C). In an embodiment, the (1-2)□h OIS magnetic member 511b may be disposed below the (1-1)□h OIS magnetic member 511a (e.g., in the -Z direction with reference to FIG. 3C). In an embodiment, the (1-1)□h OIS magnetic member 511a and the (1-2)□h OIS magnetic member 511b may have different poles facing the first OIS coil 512 located on the first portion 321 of the camera housing 320. For example, the pole of the (1-1)□h OIS magnetic member 511a facing the first OIS coil 512 may be an N pole, and the pole of the (1-2)□hOIS magnetic member 511b facing the first OIS coil 512 may be an S pole. Conversely, the pole of the (1-1)□h OIS magnetic member 511a facing the first OIS coil 512 may be an S pole, and the pole of the (1-2)□hOIS magnetic member 511b facing the first OIS coil 512 may be an N pole.

In an embodiment, as the (1-1)□h OIS magnetic member 511a and the (1-2)□h OIS magnetic member 511b of FIGS. 3A and 3C are disposed in parallel in the Z-axis direction, an electromagnetic force (e.g., a Lorentz force) may act in an F1 direction (e.g., the F1 direction of FIG. 3C) between the (1-1)□h OIS magnetic member 511a and the first OIS coil 512, as illustrated in FIG. 3C. An electromagnetic force (e.g., a Lorentz force) may act in an F2 direction (e.g., the F2 direction of FIG. 3C) between the (1-2)□h OIS magnetic member 511b and the first OIS coil 512. In an embodiment, depending on a direction of current flowing through the first OIS coil 512, an electromagnetic force may act in the F2 direction between the (1-1)□h OIS magnetic member 511a and the first OIS coil 512, and an electromagnetic force may act in the F1 direction between the (1-2)□hOIS magnetic member 511b and the first OIS coil 512. Accordingly, the reflective-system actuator (e.g., the reflective member R and the carrier 330) may rotate about the first axis R1 (e.g., the yaw axis) with respect to the camera housing 320. According to an embodiment of the disclosure, as the reflective-system actuator rotates about the first axis R1 (e.g., the yaw axis) to correct image shake, a gap between the middle guide 340 and the carrier 330 may be reduced, compared with a case in which the reflective-system actuator rotates about the Z-axis of FIG. 3B (e.g., the roll axis) to correct image shake. For example, when the reflective-system actuator rotates about the Z-axis of FIG. 3B, a gap in the X-axis direction of FIG. 3B may be required between the carrier 330 and the middle guide 340 for driving of the carrier 330. Therefore, according to the disclosure, when the reflective-system actuator rotates about the first axis R1 to correct image shake, the gap between the carrier 330 and the middle guide 340 in the X-axis direction may be relatively reduced, thereby reducing the size of the camera module 300. In an embodiment, when the reflective-system actuator rotates about the first axis R1, image rotation occurring during image-shake correction may be reduced, compared with a case in which the reflective-system actuator rotates about the Z-axis of FIG. 3B.

In an embodiment, as the (1-2)□h OIS magnetic member 511b is disposed below the (1-1)□hOIS magnetic member 511a, a height occupied by the first OIS magnetic member 511 in the carrier 330 (e.g., a length in the Z-axis direction with reference to FIG. 3C) may be reduced, compared with a case in which the (1-1)□h OIS magnetic member 511a and the (1-2)□h OIS magnetic member 511b are disposed side by side in the X-axis direction of FIG. 3C. Accordingly, the overall thickness of the camera module 300 (e.g., the length in the Z-axis direction of FIG. 3C) may be reduced.

In an embodiment, as the (1-2)□h OIS magnetic member 511b is disposed below the (1-1)□hOIS magnetic member 511a, the (1-1)□hOIS magnetic member 511a, the (1-2)□h OIS magnetic member 511b, and the first OIS coil 512 may extend in length in the X-axis direction of FIG. 3C to widen an overlapping region between the first OIS magnetic member 511 and the first OIS coil 512. When the (1-1)□h OIS magnetic member 511a and the (1-2)□h OIS magnetic member 511b are disposed side by side in the X-axis direction of FIG. 3C, extension in length of the (1-1)□hOIS magnetic member 511a, the (1-2)□h OIS magnetic member 511b, and the first OIS coil 512 in the Z-axis direction of FIG. 3C may be limited in order to limit an increase in thickness of the camera module 300. Accordingly, as illustrated in FIG. 3C, when the (1-2)□h OIS magnetic member 511b is disposed below the (1-1)□h OIS magnetic member 511a, stability of driving of the first OIS actuator 511, 512 may be secured with a lower driving current, compared with a case in which the (1-1)□h OIS magnetic member 511a and the (1-2)□h OIS magnetic member 511b are disposed side by side in the X-axis direction of FIG. 3C.

According to an embodiment (not illustrated), the first OIS actuator 511, 512 may not be limited to the first OIS magnetic member 511 and the first OIS coil 512 disposed on the first surface of the carrier 330 (e.g., the surface oriented in the -Y direction with reference to FIG. 3A). In an embodiment, the first OIS magnetic member 511 may be disposed on the bottom surface of the carrier 330 (e.g., the surface oriented in the -Z direction with reference to FIG. 3A) facing the support surface 325 of the camera housing 320. The first OIS coil 512 may be disposed on the support surface 325 of the camera housing 320 so as to face the first OIS magnetic member 511. In this case, the first OIS coil 512 may be a coil wound in multiple turns (e.g., a cylindrical coil). In an embodiment, through a solenoid force acting between the first OIS magnetic member 511 disposed on the bottom surface of the carrier 330 and the first OIS coil 512 disposed on the support surface 325 of the camera housing 320, the carrier 330 may rotate about the first axis R1 so as to correct image shake.

According to an embodiment, as illustrated in FIGS. 3B and 4, when the first OIS actuator 511, 512, the second OIS actuator 521, 522, and/or the third OIS actuator 531, 532 are not operated, the carrier 330 may be disposed in the camera housing 320 in a "default position" state. In an embodiment, the "default position" of the carrier 330 may be an original state assembled in the camera housing 320, and may be a state in which the carrier 330 does not rotate about the first axis R1 or the second axis R2. In an embodiment, when the carrier 330 is in the default position, the incident surface S1 of the reflective member R may be perpendicular to the Z-axis of FIG. 4, and the exit surface S2 may be perpendicular to the X-axis of FIG. 4.

In an embodiment, the carrier 330 may rotate about the first axis R1 based on operation of the first OIS actuator 511, 512 and/or the third OIS actuator 531, 532. The carrier 330 may rotate about the second axis R2 based on operation of the second OIS actuator 521, 522. In an embodiment, the first axis R1 may be an exit optical axis substantially parallel to the X-axis of FIG. 3A and passing through the center of the exit surface S2 of the reflective member R. In an embodiment, the second axis R2 may be an axis substantially parallel to the Y-axis of FIG. 3A and passing through the reflective surface S3 of the reflective member R. In an embodiment, an intersection point of the first axis R1 and the second axis R2 may be located on the reflective surface S3 and may be the center of rotation of the carrier 330 and the reflective member R.

In an embodiment, a reflection center may be an intersection point of an incident optical axis (e.g., the Z-axis of FIG. 3A) passing through the center of the incident surface S1 of the reflective member R and an exit optical axis (e.g., the X-axis of FIG. 3A) passing through the center of the exit surface S2 of the reflective member R. In an embodiment, the reflection center may be located on the reflective surface S3. In an embodiment, the reflection center and the center of rotation may coincide with each other. Accordingly, according to an embodiment of the disclosure, as the center of rotation of the reflective member R coincides with the reflection center of the reflective member R, an error in correction of image shake based on control of the first OIS actuator 511, 512, the second OIS actuator 521, 522, and the third OIS actuator 531, 532 may be reduced.

According to an embodiment, as illustrated in FIGS. 4, 5A, and 5B, the carrier 330 may include a first guide groove 410 facing the second portion 322 of the camera housing 320. The middle guide 340 may include a second guide groove 420 formed on one surface facing the carrier 330 and corresponding to the first guide groove 410. The first guide groove 410 and the second guide groove 420 may be located in one direction perpendicular to the exit surface S2 of the reflective member R (e.g., the +X direction of FIG. 3A).

In an embodiment, referring to FIGS. 4, 5A, and 5B, the first guide groove 410 and the second guide groove 420 may be formed in shapes that allow the carrier 330 to rotate about the first axis R1 with respect to the middle guide 340. For example, the first guide groove 410 and the second guide groove 420 may be portions of a virtual circle (e.g., a circle on the YZ plane of FIG. 5A) perpendicular to the first axis R1. In an embodiment, the first guide groove 410 and the second guide groove 420 may have an identical curvature.

According to an embodiment, as illustrated in FIGS. 4, 5A, and 5B, the first OIS balls b1 may be disposed between the first guide groove 410 and the second guide groove 420. The first OIS balls b1 may guide rotation of the carrier 330 about the first axis R1 with respect to the middle guide 340.

According to an embodiment, as illustrated in FIGS. 5A and 5B, the first guide groove 410 may include a (1-1)□h guide groove 411 and a (1-2) □h guide groove 412. In an embodiment, the (1-1)□h guide groove 411 and the (1-2)□hguide groove 412 may be disposed opposite to each other with respect to the center of the carrier 330 about the Z-axis of FIG. 5A. In an embodiment, the second guide groove 420 may include a (2-1)□h guide groove 421 corresponding to the (1-1)□h guide groove 411 and a (2-2)□h guide groove 422 corresponding to the (1-2)□h guide groove 412.

In an embodiment, referring to FIGS. 5A and 5B, the number of first OIS balls b1 disposed between the (1-1)□h guide groove 411 and the (2-1)□h guide groove 421 (hereinafter, a first rail) and the number of second OIS balls b2 disposed between the (1-2)□h guide groove 412 and the (2-2)□h guide groove 422 (hereinafter, a second rail) may differ from each other. In an embodiment, a plurality of first OIS balls b1 may be disposed on the first rail. On the second rail, a smaller number of first OIS balls b1 than the number of first OIS balls b1 disposed on the first rail may be disposed. In an embodiment, at least two first OIS balls b1 may be disposed on the first rail. One first OIS ball b1 may be disposed on the second rail. The above-described number of first OIS balls b1 is an example, and may not be limited thereto. In an embodiment, the number of first OIS balls b1 disposed on the first rail and the second rail may be the same as each other.

In an embodiment, referring to FIGS. 5A and 5B, as described above, three first OIS balls b1 may be disposed on the first rail. One first OIS ball b1 may be disposed on the second rail. In an embodiment, the first rail may be a main rail, and the second rail may be a sub-rail. In an embodiment, rotation of the carrier 330 about the first axis R1 with respect to the middle guide 340 may be substantially guided through the first OIS balls b1 disposed on the first rail, which is a main rail. In an embodiment, the first OIS balls b1 disposed on the second rail, which is a sub-rail, may assist rotation of the carrier 330 about the first axis R1 with respect to the middle guide 340. In an embodiment, as the length of the main rail increases, tilting of the carrier 330 guided through the first OIS balls b1 disposed on the main rail may be prevented. Accordingly, the main rail (e.g., the first rail) may have a relatively greater length than the sub-rail (e.g., the second rail).

In an embodiment, referring to FIGS. 5A and 5B, the carrier 330 and the middle guide 340 may be supported at at least three points through the first OIS balls b1 disposed in the first guide groove 410 and the second guide groove 420. For example, among the three first OIS balls b1 disposed on the first rail, the first OIS ball b1 located at the central portion may be smaller than the first OIS balls b1 located in an upward direction (e.g., the +Z direction with reference to FIG. 5A) and a downward direction (e.g., the -Z direction with reference to FIG. 5A). In this case, the carrier 330 and the middle guide 340 may be in contact with each other at three points through the first OIS ball b1 located in the upward direction on the first rail, the first OIS ball b1 located in the downward direction, and the first OIS ball b1 disposed on the second rail.

In an embodiment, referring to FIG. 5C, two first OIS balls b1 may be disposed on the first rail (e.g., the (1-1)□h guide groove 411 and the (2-1)□h guide groove 421 of FIG. 5C). In an embodiment, two first OIS balls b1 may be disposed on opposite sides with respect to a protrusion 360 located on the first rail. For example, the protrusion 360 may be disposed between the two first OIS balls b1. In an embodiment, the protrusion 360 may be formed on the carrier 330 so that the protrusion 360 may be at least partially located in the (1-1)□h guide groove 411 and the (2-1)□h guide groove 421. In an embodiment, the protrusion 360 may be formed on the middle guide 340 so that the protrusion 360 may be at least partially located in the (1-1)□h guide groove 411 and the (2-1)□h guide groove 421.

In an embodiment, based on the carrier 330 and the middle guide 340 being supported at three points through the first OIS balls b1, the carrier 330 may be allowed only rotational movement about the first axis R1 with respect to the middle guide 340, and linear movement may be prevented. Accordingly, an error in correction of image shake based on rotation of the carrier 330 about the first axis R1 may be reduced.

According to an embodiment, the (1-1)□h guide groove 411 and the (2-1)□h guide groove 421 constituting the first rail, which is a main rail, may each be formed in a shape contactable with the first OIS balls b1 at at least two surfaces. For example, the (1-1)□h guide groove 411 and the (2-1)□h guide groove 421 may be formed as V-shaped grooves. As the (1-1)□h guide groove 411 and the (2-1)□h guide groove 421 are formed as V-shaped grooves, the first OIS balls b1 disposed on the first rail may be contactable with an inner surface of the (1-1)□h guide groove 411 and an inner surface of the (2-1)□h guide groove 421. In an embodiment, as the first OIS balls b1 are disposed on the first rail formed as V-shaped grooves, movement of the first OIS balls b1 to a plane other than the YZ plane may be restricted.

According to an embodiment, one of the (1-2)□h guide groove 412 and the (2-2)□h guide groove 422 constituting the second rail, which is a sub-rail, may be formed in a shape in which an inner surface located inside the guide groove is contactable with the first OIS balls b1 at at least two surfaces. The other one of the (1-2)□h guide groove 412 and the (2-2)□h guide groove 422 may be formed to have a size that allows the first OIS balls b1 to move. In an embodiment, the shape in which the inner surface located inside the guide groove is contactable with the first OIS balls b1 at at least two surfaces may be formed as a V-shaped groove. In an embodiment, the first OIS balls b1 may be capable only of rolling movement through contact with the inner surface located inside the guide groove. The guide groove formed to have a size that allows the first OIS balls b1 to move may be a U-shaped groove. In an embodiment, the first OIS balls b1 may be capable of upward/downward movement and leftward/rightward movement, in addition to rolling movement, inside the U-shaped guide groove.

In an embodiment, the (1-2)□h guide groove 412 may be formed as a V-shaped groove, and the (2-2)□h guide groove 422 may be formed as a U-shaped groove. Conversely, the (1-2)□h guide groove 412 may be formed as a U-shaped groove, and the (2-2)□h guide groove 422 may be formed as a V-shaped groove. In an embodiment, the (1-2)□hguide groove 412 and the (2-2)□hguide groove 422 may be formed as U-shaped grooves.

In an embodiment, a distance between the (1-1)□hguide groove 411 and the (1-2)□h guide groove 412 formed in the carrier 330 may differ from a distance between the (2-1)□h guide groove 421 and the (2-2)□hguide groove 422 formed in the middle guide 340 due to reasons such as a tolerance in a manufacturing process. In an embodiment, since the first OIS balls b1 located inside the U-shaped groove are movable inside the U-shaped groove, the first OIS balls b1 may compensate for a difference between the distance between the (1-1)□hguide groove 411 and the (1-2)□hguide groove 412 and the distance between the (2-1)□h guide groove 421 and the (2-2)□hguide groove 422.

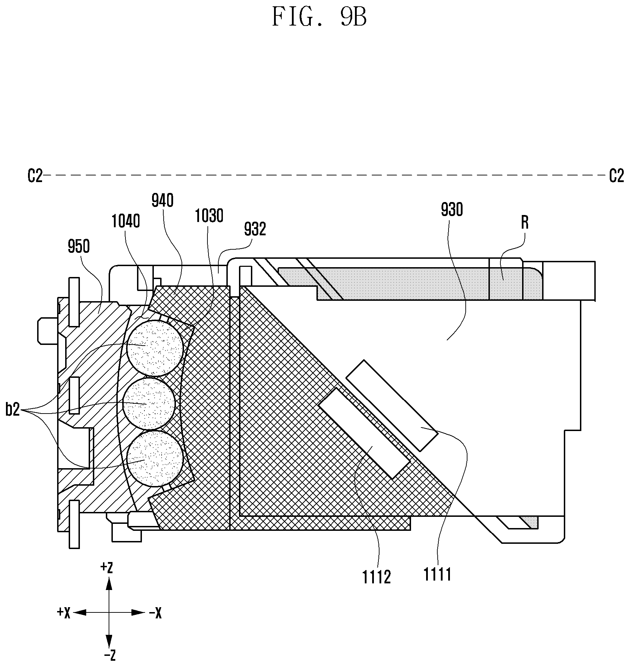

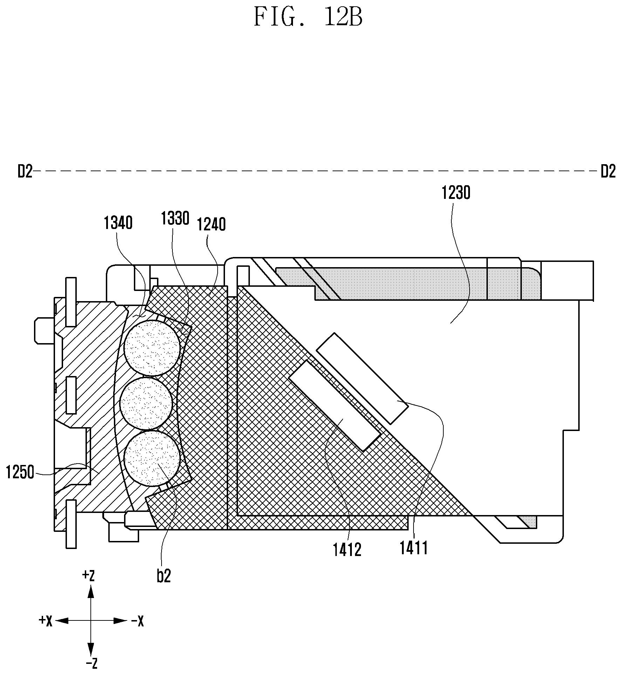

In an embodiment, referring to FIGS. 5A and 5B, one of a first attraction magnetic member 611 and a second attraction magnetic member (e.g., the second attraction magnetic member 1112 of FIG. 9B and/or the second attraction magnetic member 1412 of FIG. 12B) may be disposed on the second surface of the carrier 330. In an embodiment, the remaining one of the first attraction magnetic member 611 and the second attraction magnetic member may be disposed on one surface of the middle guide 340 facing the second surface of the carrier 330. In an embodiment, the first attraction magnetic member 611 and the second attraction magnetic member may be magnets or magnetic metal plates (e.g., yokes). In an embodiment, an attractive force may act between the first attraction magnetic member 611 and the second attraction magnetic member. The carrier 330 and the middle guide 340 may be pulled toward each other through the attractive force acting between the first attraction magnetic member 611 and the second attraction magnetic member. Accordingly, the carrier 330 and the middle guide 340 may maintain contact with the first OIS balls b1 disposed between the first guide groove 410 and the second guide groove 420.

According to an embodiment, the first attraction magnetic member 611 and the second attraction magnetic member may have various shapes. In an embodiment, referring to FIG. 3A, the first attraction magnetic member 611 may include two bar-shaped magnets. In this case, the second attraction magnetic member may include two bar-shaped magnets corresponding to the first attraction magnetic member 611. In addition, the first attraction magnetic member 611 may include a cross-shaped magnetic member. In this case, the second attraction magnetic member may include a cross-shaped magnetic member corresponding to the first attraction magnetic member 611.

In an embodiment, when the carrier 330 moves in an unintended direction other than rotation about the first axis R1 with respect to the camera housing 320 through the first OIS actuator 511, 512 and/or the third OIS actuator 531, 532, the carrier 330 may be returned to a default position through an attractive force acting between the first attraction magnetic member 611 and the second attraction magnetic member. The "default position" of the carrier 330 may be an original state assembled in the camera housing 320, and may be a state in which the carrier 330 does not rotate about the first axis R1. For example, the default position may be a position with respect to the camera housing 320 when the carrier 330 is not tilted with respect to the middle guide 340 and the OIS actuator is not driven.

In an embodiment, when power to the camera module 300 is turned off, the carrier 330 may return to and/or maintain the default position with respect to the middle guide 340 based on an attractive force acting between the first attraction magnetic member 611 and the second attraction magnetic member. For example, when power to the camera module 300 is turned off in a state in which the carrier 330 is rotated with respect to the middle guide 340 about the first axis R1, the carrier 330 may be restored to the default position with respect to the middle guide 340 through an attractive force acting between the first attraction magnetic member 611 and the second attraction magnetic member.

According to an embodiment, as illustrated in FIGS. 3A and 4, the base portion 350 may be disposed on the second portion 322 of the camera housing 320 so as to face the middle guide 340. In an embodiment, the middle guide 340 may include a third guide groove 430 facing the second portion 322. The base portion 350 may include a fourth guide groove 440 corresponding to the third guide groove 430. In an embodiment, the third guide groove 430 and the fourth guide groove 440 may be located in one direction perpendicular to the exit surface S2 of the reflective member R (e.g., the +X direction of FIG. 3A).

According to an embodiment, as illustrated in FIGS. 4, 5A, and 5B, the carrier 330 may include a first guide groove 410 facing the second portion 322 of the camera housing 320. The middle guide 340 may include a second guide groove 420 formed on one surface facing the carrier 330 and corresponding to the first guide groove 410. The first guide groove 410 and the second guide groove 420 may be located in one direction perpendicular to the exit surface S2 of the reflective member R (e.g., the +X direction of FIG. 3A).

In an embodiment, referring to FIG. 4, the third guide groove 430 and the fourth guide groove 440 may be formed in shapes that allow the middle guide 340 to rotate about the second axis R2 with respect to the base portion 350. For example, referring to FIGS. 3A and 4, the third guide groove 430 and the fourth guide groove 440 may be portions of a virtual circle on the XZ plane of FIG. 4, the virtual circle being perpendicular to the second axis R2. In an embodiment, the third guide groove 430 and the fourth guide groove 440 may have an identical curvature.

According to an embodiment, as illustrated in FIG. 4, the second OIS balls b2 may be disposed between the third guide groove 430 and the fourth guide groove 440. The second OIS balls b2 may guide rotation of the middle guide 340 about the second axis R2 with respect to the base portion 350.

According to an embodiment, as illustrated in FIG. 4, the carrier 330 may partially cover the middle guide 340. In an embodiment, a support portion 332 of the carrier 330 may cover the middle guide 340. For example, the support portion 332 may contact the middle guide 340. In an embodiment, when the middle guide 340 rotates about the second axis R2 through operation of the second OIS actuator 521, 522, the carrier 330 may be interlocked with and move together with the middle guide 340 via the support portion 332. Accordingly, the carrier 330 and the reflective member R may rotate, with respect to the image sensor 230, about the second axis R2 through the middle guide 340 so as to correct image shake.

According to an embodiment, as illustrated in FIG. 3A, the third guide groove 430 may include a (3-1)□h guide groove 431 and a (3-2)□h guide groove 432. In an embodiment, the (3-1)□h guide groove 431 and the (3-2)□h guide groove 432 may be disposed opposite to each other with respect to the center of the middle guide 340 with reference to the Z-axis of FIG. 3A. In an embodiment, the fourth guide groove 440 may include a (4-1)□h guide groove 441 corresponding to the (3-1)□h guide groove 431 and a (4-2)□h guide groove 442 corresponding to the (3-2)□h guide groove 432.

In an embodiment, second OIS balls b2 may be disposed between the (3-1)□h guide groove 431 and the (4-1)□h guide groove 441 (hereinafter, a third rail). In an embodiment, second OIS balls b2 may be disposed between the (3-2)□h guide groove 432 and the (4-2)□h guide groove 442 (hereinafter, a fourth rail).

According to an embodiment, the (3-1)□h guide groove 431 and the (4-1)□h guide groove 441 constituting the third rail may each be formed in a shape contactable with the second OIS balls b2 at at least two surfaces. For example, the (3-1)□h guide groove 431 and the (4-1)□h guide groove 441 may be formed as V-shaped grooves. As the (3-1)□h guide groove 431 and the (4-1)□h guide groove 441 are formed as V-shaped grooves, the second OIS balls b2 disposed on the third rail may be contactable with an inner surface of the (3-1)□h guide groove 431 and an inner surface of the (4-1)□h guide groove 441. In an embodiment, as the second OIS balls b2 are disposed on the third rail formed as V-shaped grooves, movement of the second OIS balls b2 to a plane other than the XZ plane may be restricted.

According to an embodiment, one of the (3-2)□h guide groove 432 and the (4-2)□h guide groove 442 constituting the fourth rail may be formed in a shape in which an inner surface located inside the guide groove is contactable with the second OIS balls b2 at at least two surfaces. The other one of the (3-2)h guide groove 432 and the (4-2)□h guide groove 442 may be formed to have a size that allows the second OIS balls b2 to move. In an embodiment, the shape in which the inner surface located inside the guide groove is contactable with the second OIS balls b2 at at least two surfaces may be formed as a V-shaped groove. In an embodiment, the second OIS balls b2 may be capable only of rolling movement through contact with the inner surface located inside the guide groove. The guide groove formed to have a size that allows the second OIS balls b2 to move may be a U-shaped groove. In an embodiment, the second OIS balls b2 may be capable of upward/downward movement and leftward/rightward movement, in addition to rolling movement, inside the U-shaped guide groove.

In an embodiment, the (3-2)□h guide groove 432 may be formed as a V-shaped groove, and the (4-2)□h guide groove 442 may be formed as a U-shaped groove. Conversely, the (3-2)□h guide groove 432 may be formed as a U-shaped groove, and the (4-2)□h guide groove 442 may be formed as a V-shaped groove. In an embodiment, the (3-2)□h guide groove 432 and the (4-2)□h guide groove 442 may be formed as U-shaped grooves.

In an embodiment, a distance between the (3-1)□h guide groove 431 and the (3-2)□h guide groove 432 formed in the middle guide 340 may differ from a distance between the (4-1)□h guide groove 441 and the (4-2)□h guide groove 442 formed in the base portion 350 due to reasons such as a tolerance in a manufacturing process. In an embodiment, since the second OIS balls b2 located inside the U-shaped groove are movable inside the U-shaped groove, the second OIS balls b2 may compensate for a difference between the distance between the (3-1)□h guide groove 431 and the (3-2)h guide groove 432 and the distance between the (4-1)□h guide groove 441 and the (4-2)□h guide groove 442.

According to an embodiment, as illustrated in FIG. 3A, a third attraction magnetic member 613 may be disposed on the second portion 322 of the camera housing 320. In an embodiment, the third attraction magnetic member 613 may be a magnet or a magnetic metal plate (e.g., a yoke). In an embodiment, the third attraction magnetic member 613 may be disposed on the flexible printed circuit board 560 and may be disposed on an outer side of the base portion 350. In an embodiment, the third attraction magnetic member 613 and the second OIS coil 522 may face each other with the flexible printed circuit board 560 therebetween. For example, the third attraction magnetic member 613 may be disposed on one surface of the flexible printed circuit board 560 and disposed on the outer side of the base portion 350, and the second OIS coil 522 may be disposed on the other surface of the flexible printed circuit board 560 opposite to the one surface and disposed on an inner side of the base portion 350. In summary, the second OIS coil 522 may be disposed between the second OIS magnetic member 521 and the third attraction magnetic member 613.

In an embodiment, an attractive force may act between the third attraction magnetic member 613 and the second OIS magnetic member 521 disposed on the middle guide 340. In an embodiment, the middle guide 340 and the base portion 350 may be pulled toward each other through an attractive force acting between the second OIS magnetic member 521 and the third attraction magnetic member 613. Accordingly, the middle guide 340 and the base portion 350 may maintain contact with the second OIS balls b2 disposed between the third guide groove 430 and the fourth guide groove 440.

According to an embodiment, the camera module 300 may include at least one lens module facing at least one of the incident surface S1 of the reflective member R and the exit surface S2 of the reflective member R. In an embodiment, a first lens module may be disposed so as to face the incident surface S1 of the reflective member R. In an embodiment, a second lens module may be disposed so as to face the exit surface S2 of the reflective member R. In an embodiment, the first lens module and the second lens module may be at least partially coupled to the carrier 330 and may rotate with respect to the camera housing 320 together with the carrier 330 based on operation of the first OIS actuator 511, 512, the second OIS actuator 521, 522, and/or the third OIS actuator 531, 532. In an embodiment, at least one of the first lens module and the second lens module may be omitted from the camera module 300.

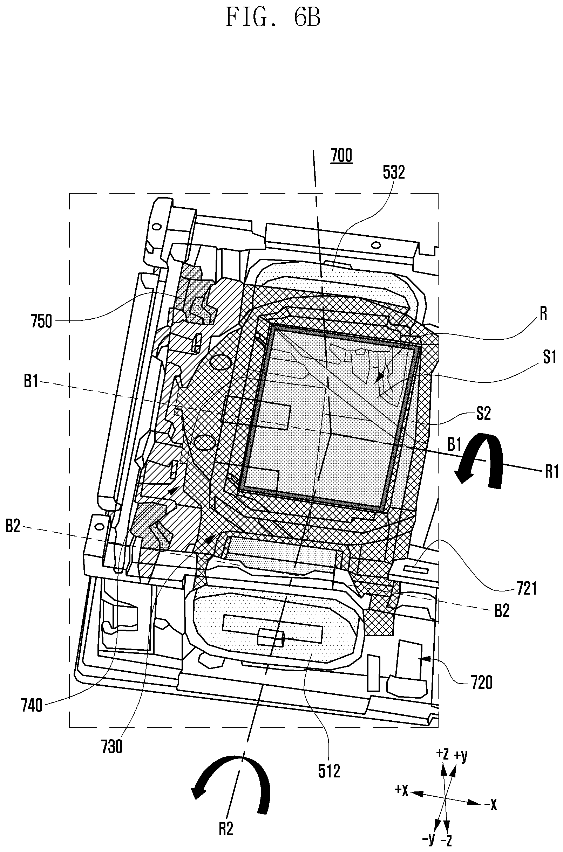

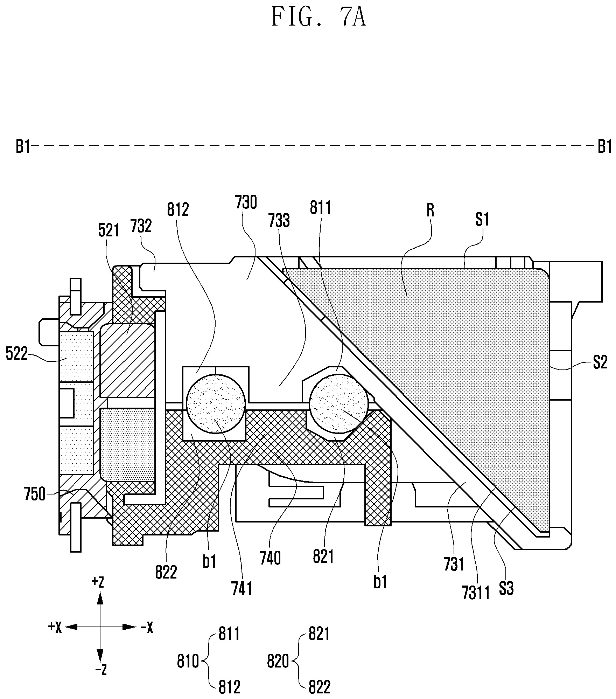

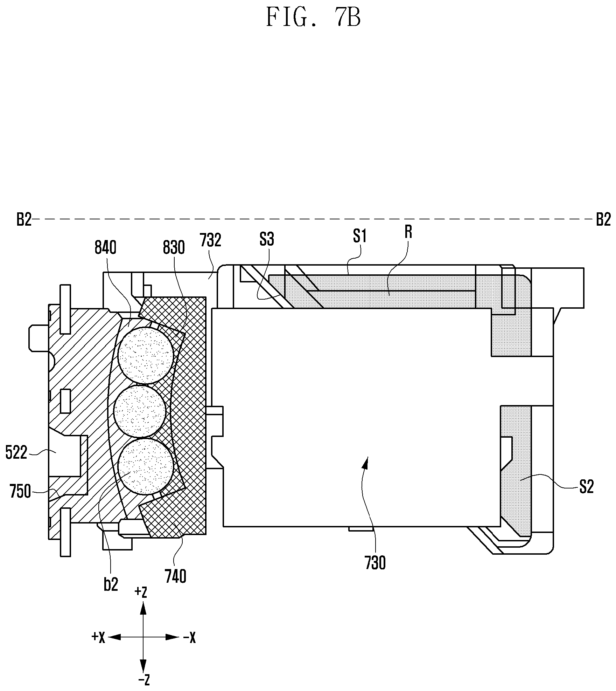

FIG. 6A is an exploded perspective view of a camera module according to an embodiment of the disclosure. FIG. 6B is a view illustrating a coupling relationship among a base portion, a middle guide, and a carrier of FIG. 6A. FIG. 7A is a cross-sectional view taken along line B1-B1 of FIG. 6B. FIG. 7B is a cross-sectional view taken along line B2-B2 of FIG. 6B.

The following description may be a description of a camera module 700 according to an embodiment. Descriptions of the same or similar components as those described with reference to FIGS. 3A to 5B will be omitted.

In the following description, descriptions overlapping those described with reference to FIGS. 3A to 5B will be omitted, and portions different from those described with reference to FIGS. 3A to 5B will be described.

In an embodiment, as described with reference to FIGS. 3A to 5B, a reflective-system actuator including the carrier 730 and the reflective member R disposed on the seating portion 731 of the carrier 730 may be disposed in the camera housing 720 so as to be rotatable with respect to the image sensor 230 located on the fourth portion 724 of the camera housing 720. In an embodiment, the carrier 730 may be configured to rotate with respect to the camera housing 720 about a first axis R1 (e.g., the X-axis or yaw axis of FIG. 6B) and a second axis R2 (e.g., the Y-axis or pitch axis of FIG. 6B) through the first OIS actuator 511, 512, the second OIS actuator 521, 522, and/or the third OIS actuator 531, 532, so as to perform an optical image stabilizer (OIS) function of correcting shake occurring in the camera module 700.

In an embodiment, as described with reference to FIGS. 3A to 5B, the camera module may perform an auto focus (AF) function of automatically adjusting a focus of a lens (e.g., the lens 3101 of FIG. 3A) with respect to a subject outside the electronic device 101 by moving a lens driver (e.g., the lens driver 310 of FIG. 3A) with respect to the image sensor 230 under control of the processor 120. In an embodiment, the lens driver 310 may move with respect to the image sensor 230 (e.g., the image sensor 230 of FIG. 2) along the optical axis (OA) of the lens (e.g., the X-axis direction of FIG. 6A) through at least one of the first AF actuator (e.g., the first AF actuator 541, 542 of FIG. 3A) and the second AF actuator (e.g., the second AF actuator 551, 552 of FIG. 3A).

According to an embodiment, as illustrated in FIGS. 6A and 6B, the camera module 700 may include a camera housing 720, a reflective-system actuator, a middle guide 740, a base portion 750, a lens driver (e.g., the lens driver 310 of FIG. 3A), a flexible printed circuit board 560, a first OIS actuator 511, 512, a second OIS actuator 521, 522, a third OIS actuator 531, 532, a first AF actuator 541, 542, a second AF actuator 551, 552, first OIS balls b1, second OIS balls b2, and/or AF balls b3. At least one of the above-described components may be omitted, or at least one component may be added. In an embodiment, at least one of the first OIS actuator 511, 512 and the third OIS actuator 531, 532 may be omitted.

In an embodiment, referring to FIGS. 6A and 6B, the reflective-system actuator, the middle guide 740, the base portion 750, the lens driver, and the image sensor 230 may be disposed in the camera housing 720. In an embodiment, the base portion 750, the middle guide 740, the reflective-system actuator, the lens driver, and the image sensor 230 may be disposed in the camera housing 720 in this order.

According to an embodiment, as illustrated in FIG. 7A, the carrier 730 may include a seating portion 731 on which the reflective member R is disposed. In an embodiment, the seating portion 731 may include a groove having a shape corresponding to the carrier 730. In an embodiment, the seating portion 731 may include an inclined surface 7311 facing the reflective surface S3 of the carrier 730. In an embodiment, the inclined surface 7311 may be substantially parallel to the reflective surface S3. In an embodiment, the reflective surface S3 of the reflective member R may be a surface inclined at a predetermined angle with respect to a support surface 725 of the camera housing 720. The inclined surface 7311 may form a predetermined angle with the support surface 725 of the camera housing 720, as the inclined surface 7311 is substantially parallel to the reflective surface S3.

In an embodiment, referring to FIGS. 6A to 7A, the middle guide 740 may be at least partially disposed between the carrier 730 and a portion of the camera housing 720 (e.g., the second portion 722). The middle guide 740 may guide rotation of the carrier 730 about the first axis R1 (e.g., the X-axis or yaw axis of FIG. 6A) perpendicular to the exit surface S2 of the reflective member R. In an embodiment, the first guide groove 810 formed in the carrier 730 and the second guide groove 820 formed in the middle guide 740 may face each other. The first OIS balls b1 may be disposed between the first guide groove 810 and the second guide groove 820. In an embodiment, the carrier 730 may rotate about the first axis R1 with respect to the middle guide 740 using the first OIS balls b1 as support points. Accordingly, the processor may correct image shake by rotating the carrier 730 and the reflective member R about the first axis R1 with respect to the image sensor 230 based on operation of the first OIS actuator 511, 512 and/or the third OIS actuator 531, 532.

In an embodiment, a current applied from the flexible printed circuit board 560 may flow through the first OIS coil 512 of the first OIS actuator 511, 512. As the current flows through the first OIS coil 512, a magnetic field may be formed, and the carrier 730 and the reflective member R may rotate about the first axis R1 through a Lorentz force acting between the first OIS coil 512 and the first OIS magnet 511.

In an embodiment, a current applied from the flexible printed circuit board 560 may flow through the third OIS coil 532 of the third OIS actuator 531, 532. As the current flows through the third OIS coil 532, a magnetic field may be formed, and the carrier 730 and the reflective member R may rotate about the first axis R1 through a Lorentz force acting between the third OIS coil 532 and the third OIS magnet 531.

In an embodiment, referring to FIGS. 6A to 7B, the base portion 750 may be a relatively fixed object with respect to the middle guide 740. In an embodiment, the base portion 750 may be disposed on a portion of the camera housing 720 (e.g., the second portion 722) so as to face the middle guide 740. In an embodiment, the base portion 750 may guide rotation of the middle guide 740 about a second axis R2 (e.g., the Y-axis or pitch axis of FIG. 6A), the second axis R2 being perpendicular to the first axis R1 and parallel to one edge of the support surface 725 of the camera housing 720. The third guide groove 830 (e.g., the (3-1)□h guide groove 831 and the (3-2)hguide groove 832 of FIG. 6A) formed in the middle guide 740 and the fourth guide groove 840 (e.g., the (4-1)hguide groove 841 and the (4-2)□h guide groove 842 of FIG. 6A) formed in the base portion 750 may face each other. In an embodiment, the third guide groove 830 and the fourth guide groove 840 may be formed in shapes that allow the middle guide 740 to rotate about the second axis R2 with respect to the base portion 750. For example, referring to FIGS. 6A and 7A, the third guide groove 830 and the fourth guide groove 840 may be portions of a virtual circle on the XZ plane of FIG. 6A, the virtual circle being perpendicular to the second axis R2. In an embodiment, the third guide groove 830 and the fourth guide groove 840 may have an identical curvature. In an embodiment, the second OIS balls b2, which guide rotation of the middle guide 740 with respect to the base portion 750, may be disposed in the third guide groove 830 and the fourth guide groove 840. The middle guide 740 may be configured to rotate about the second axis R2 with respect to the base portion 750 through the second OIS balls b2. In an embodiment, the second OIS balls b2 may move along the third guide groove 830 and the fourth guide groove 840 based on rotation of the middle guide 740 with respect to the base portion 750.

According to an embodiment, as illustrated in FIGS. 6A and 7A, the carrier 730 may partially cover the middle guide 740. In an embodiment, a support portion 732 of the carrier 730 may cover the middle guide 740. For example, the support portion 732 may contact the middle guide 740. In an embodiment, when the middle guide 740 rotates about the second axis R2 through operation of the second OIS actuator 521, 522, the carrier 730 may be interlocked with and move together with the middle guide 740 via the support portion 732. Accordingly, the processor (e.g., the processor 120 of FIG. 1) may correct image shake by rotating the carrier 730 and the reflective member R about the second axis R2 with respect to the image sensor 230 based on operation of the second OIS actuator 521, 522. In an embodiment, the reflective member R may be disposed on the seating portion 731 of the carrier 730 and may rotate together with the carrier 730.

In an embodiment, a current applied from the flexible printed circuit board 560 may flow through the second OIS coil 522 of the second OIS actuator 521, 522. As the current flows through the second OIS coil 522, a magnetic field may be formed, and the middle guide 740 and the carrier 730 may rotate about the second axis R2 through a Lorentz force acting between the second OIS coil 522 and the second OIS magnet 521.

According to an embodiment, the first OIS magnetic member 511 may be disposed on one surface of the carrier 730 so as to face the first OIS coil 512 disposed on the first portion 721 of the camera housing 720. The third OIS magnetic member 531 may be disposed on the other surface of the carrier 730 opposite to the one surface so as to face the third OIS coil 532 disposed on the third portion 723 of the camera housing 720. In an embodiment, the second OIS magnetic member 521 may be disposed on the middle guide 740 so as to face the second OIS coil 522 disposed on the second portion 722 of the camera housing 720. As the first portion 721 and the second portion 722 of the camera housing 720 are in a perpendicular positional relationship with each other, the first OIS magnetic member 511 and the second OIS magnetic member 521 may be positioned to be perpendicular to each other. As the second portion 722 and the third portion 723 of the camera housing 720 are in a perpendicular positional relationship with each other, the second OIS magnetic member 521 and the third OIS magnetic member 531 may be positioned to be perpendicular to each other.

In an embodiment, at least one of the first OIS actuator 511, 512 and the third OIS actuator 531, 532 may be omitted. In an embodiment, the first OIS actuator 511, 512 may be omitted. In this case, the camera module 700 may correct shake of an image as the carrier 730 rotates about the first axis R1 through the third OIS actuator 531, 532 and rotates about the second axis R2 through the second OIS actuator 521, 522.

In an embodiment, the third OIS actuator 531, 532 may be omitted. In this case, the camera module 700 may correct shake of an image as the carrier 730 rotates about the first axis R1 through the first OIS actuator 511, 512 and rotates about the second axis R2 through the second OIS actuator 521, 522.

In the following description, the camera module 700 will be described on the assumption that the camera module 700 includes the first OIS actuator 511, 512, the second OIS actuator 521, 522, and the third OIS actuator 531, 532. However, the following description may be equally applied to a case in which the camera module 700 includes the first OIS actuator 511, 512 and the second OIS actuator, or a case in which the camera module 700 includes the second OIS actuator 521, 522 and the third OIS actuator 531, 532.

According to an embodiment, the first OIS actuator 511, 512 may not be limited to the first OIS magnetic member 511 disposed on the carrier 730 and the first OIS coil 512. In an embodiment, the first OIS magnetic member 511 may be disposed on the bottom surface of the carrier 730 (e.g., the surface oriented in the -Z direction with reference to FIG. 6A) facing the support surface 725 of the camera housing 720. The first OIS coil 512 may be disposed on the support surface 725 of the camera housing 720 so as to face the first OIS magnetic member 511. In this case, the first OIS coil 512 may be a coil wound in multiple turns (e.g., a cylindrical coil). In an embodiment, through a solenoid force acting between the first OIS magnetic member 511 disposed on the bottom surface of the carrier 730 and the first OIS coil 512 disposed on the support surface 725 of the camera housing 720, the carrier 730 may rotate about the first axis R1 so as to correct image shake.

According to an embodiment of the disclosure, the reflective-system actuator (e.g., the reflective member R and the carrier 730) may rotate about the first axis R1 (e.g., the yaw axis) with respect to the camera housing 720. In the camera module 700, as the reflective-system actuator rotates about the first axis R1 (e.g., the yaw axis) to correct image shake, a gap between the middle guide 740 and the carrier 730 may be reduced, compared with a case in which the reflective-system actuator rotates about the Z-axis of FIG. 6B (e.g., the roll axis) to correct image shake. For example, when the reflective-system actuator rotates about the Z-axis of FIG. 6B, a gap in the X-axis direction of FIG. 6B may be required between the carrier 730 and the middle guide 740 for driving of the carrier 730. Therefore, according to the disclosure, when the reflective-system actuator rotates about the first axis R1 to correct image shake, the gap between the carrier 730 and the middle guide 740 in the X-axis direction may be relatively reduced, thereby reducing the size of the camera module 700. In an embodiment, when the reflective-system actuator rotates about the first axis R1, image rotation occurring during image-shake correction may be reduced, compared with a case in which the reflective-system actuator rotates about the Z-axis of FIG. 6B.

According to an embodiment, as illustrated in FIG. 7A, the carrier 730 may include a first flat portion 733 in which the first guide groove 810 (e.g., the (1-1)□h guide groove 811 and the (1-2)□h guide groove 812) is formed. In an embodiment, the first flat portion 733 may be substantially parallel to the support surface 725 of the camera housing 720. In an embodiment, the first guide groove 810 may be formed in the first flat portion 733 so as to face a second flat portion 741 of the middle guide 740.

According to an embodiment, as illustrated in FIG. 7A, the middle guide 740 may include the second flat portion 741 in which the second guide groove 820 is formed. In an embodiment, the second flat portion 741 may be substantially parallel to the support surface 725 of the camera housing 720. In an embodiment, the second guide groove 820 may be formed in the second flat portion 741 so as to face the first guide groove 810 formed in the first flat portion 733 of the carrier 730.

In an embodiment, referring to FIG. 7A, the first guide groove 810 and the second guide groove 820 may be located in one direction perpendicular to the exit surface S2 of the reflective member R (e.g., the +X direction of FIG. 7A).

According to an embodiment, as illustrated in FIG. 7A, the first guide groove 810 may include a (1-1)□h guide groove 811 and a (1-2)□h guide groove 812. In an embodiment, the first guide groove 810 and the second guide groove 820 may be disposed side by side along the X-axis of FIG. 7A. In an embodiment, the (1-1)□h guide groove 811 and the (1-2)□h guide groove 812 may be disposed on an optical axis (e.g., the X-axis of FIG. 7A) passing through the center of the exit surface S2 of the reflective member R. In an embodiment, the first axis R1, which is a rotation axis of the reflective-system actuator, may be the same axis as the optical axis passing through the center of the exit surface S2. Accordingly, the first axis R1 may pass through the (1-1)□h guide groove 811 and the (1-2)□h guide groove 812.

According to an embodiment, as illustrated in FIG. 7A, the second guide groove 820 may include a (2-1)h guide groove 821 corresponding to the (1-1)□h guide groove 811 and a (2-2)□h guide groove 822 corresponding to the (1-2)□h guide groove 812.

According to an embodiment, as illustrated in FIGS. 6A and 7A, the carrier 730 may rotate about the first axis R1 with respect to the middle guide 740 using the first OIS balls b1 as support points. In an embodiment, the carrier 730 and the middle guide 740 may contact each other at at least two points through the first OIS balls b1. In an embodiment, the carrier 730 may be coupled to the middle guide 740 through the first OIS balls b1 such that movement of the carrier 730 with respect to the middle guide 740 in directions other than rotation about the first axis R1 on the YZ plane of FIG. 6A is restricted. For example, movement of the carrier 730 in directions other than rotation on the YZ plane of FIG. 6A may be restricted through a portion of the middle guide 740.

In an embodiment, the carrier 730 may rotate on the YZ plane of FIG. 6A with respect to the middle guide 740 using the first OIS balls b1 as support points. In an embodiment, the first OIS balls b1 may not move relative to the carrier 730, and the carrier 730 may relatively move with respect to the first OIS balls b1 about the first OIS balls b1 as center points. Accordingly, the processor 120 may correct image shake by rotating the carrier 730 and the reflective member R about the first axis R1 with respect to the image sensor 230 based on operation of the first OIS actuator 511, 512 and/or the third OIS actuator 531, 532.

According to an embodiment of the disclosure, the carrier 730 may rotate about the first axis R1 based on operation of the first OIS actuator 511, 512 and/or the third OIS actuator 531, 532. The carrier 330 may rotate about the second axis R2 based on operation of the second OIS actuator 521, 522. In an embodiment, the first axis R1 may be an exit optical axis parallel to the X-axis of FIG. 6B and passing through the center of the exit surface S2 of the reflective member R. In an embodiment, the second axis R2 may be an axis parallel to the Y-axis of FIG. 6A and passing through the reflective surface S3 of the reflective member R. In an embodiment, an intersection point of the first axis R1 and the second axis R2 may be located on the reflective surface S3 and may be the center of rotation of the carrier 730 and the reflective member R.

In an embodiment, a reflection center may be an intersection point of an incident optical axis (e.g., the Z-axis of FIG. 7A) passing through the center of the incident surface S1 of the reflective member R and an exit optical axis (e.g., the X-axis of FIG. 7A) passing through the center of the exit surface S2 of the reflective member R. In an embodiment, the reflection center may be located on the reflective surface S3. In an embodiment, the reflection center and the center of rotation may coincide with each other. Accordingly, according to an embodiment of the disclosure, as the center of rotation of the reflective member R coincides with the reflection center of the reflective member R, an error in correction of image shake based on control of the first OIS actuator 511, 512, the second OIS actuator 521, 522, and the third OIS actuator 531, 532 may be reduced.

In an embodiment, referring to FIG. 7A, the (1-1)h guide groove 811 and the (2-1)□h guide groove 821 may each be formed in a shape contactable with the first OIS balls b1 at at least two surfaces. For example, the (1-1)□h guide groove 811 and the (2-1)□h guide groove 821 may be formed as V-shaped grooves. As the (1-1)□h guide groove 811 and the (2-1)□h guide groove 821 are formed as V-shaped grooves, the first OIS balls b1 disposed between the (1-1)□h guide groove 811 and the (2-1)□h guide groove 821 (e.g., on the first rail) may contact an inner surface of the (1-1)□h guide groove 811 and an inner surface of the (2-1)□h guide groove 821. Accordingly, the first OIS balls b1 disposed on the first rail may substantially guide rotation of the carrier 730 in the direction of the first axis R1.

In an embodiment, referring to FIG. 7A, at least one of the (1-2)□h guide groove 812 and the (2-2)□h guide groove 822 may be formed to have a size that allows the first OIS balls b1 to move. The guide groove formed to have a size that allows the first OIS balls b1 to move may be a U-shaped groove. In an embodiment, the first OIS balls b1 may be capable of upward/downward movement and leftward/rightward movement, in addition to rolling movement, inside the U-shaped guide groove.

In an embodiment, the (1-2)□h guide groove 812 may be formed as a V-shaped groove, and the (2-2)□h guide groove 822 may be formed as a U-shaped groove. Conversely, the (1-2)□h guide groove 812 may be formed as a U-shaped groove, and the (2-2)□h guide groove 822 may be formed as a V-shaped groove. In an embodiment, the (1-2)□h guide groove 812 and the (2-2)□h guide groove 822 may be formed as U-shaped grooves.

In an embodiment, a distance between the (1-1)□h guide groove 811 and the (1-2)□h guide groove 812 formed in the carrier 730 may differ from a distance between the (2-1)□h guide groove 821 and the (2-2)h guide groove 822 formed in the middle guide 740 due to reasons such as a tolerance in a manufacturing process. In an embodiment, since the first OIS balls b1 located inside the U-shaped groove are movable inside the U-shaped groove, the first OIS balls b1 may compensate for a difference between the distance between the (1-1)□h guide groove 811 and the (1-2)□h guide groove 812 and the distance between the (2-1)□h guide groove 821 and the (2-2)□h guide groove 822.

According to an embodiment, one of a first attraction magnetic member (e.g., the first attraction magnetic member 611 of FIG. 3A, the first attraction magnetic member 1111 of FIG. 9B, and/or the first attraction magnetic member 1411 of FIG. 12B) and a second attraction magnetic member (e.g., the second attraction magnetic member 1112 of FIG. 9B and/or the second attraction magnetic member 1412 of FIG. 12B) may be disposed on one surface of the carrier 730 facing the middle guide 740. In an embodiment, the remaining one of the first attraction magnetic member and the second attraction magnetic member may be disposed on one surface of the middle guide 740 facing the carrier 730. In an embodiment, the first attraction magnetic member and the second attraction magnetic member may be magnets or magnetic metal plates (e.g., yokes). In an embodiment, an attractive force may act between the first attraction magnetic member and the second attraction magnetic member. The carrier 730 and the middle guide 740 may be pulled toward each other through the attractive force acting between the first attraction magnetic member and the second attraction magnetic member. Accordingly, the carrier 730 and the middle guide 740 may maintain contact with the first OIS balls b1 disposed between the first guide groove 810 and the second guide groove 820.

According to an embodiment, as illustrated in FIG. 6A, a third attraction magnetic member 613 may be disposed on the second portion 722 of the camera housing 720. In an embodiment, the third attraction magnetic member 613 may be a magnet or a magnetic metal plate (e.g., a yoke). In an embodiment, the third attraction magnetic member 613 may be disposed on the flexible printed circuit board 560 and may be disposed on an outer side of the base portion 750. In an embodiment, the third attraction magnetic member 613 and the second OIS coil 522 may face each other with the flexible printed circuit board 560 therebetween. For example, the third attraction magnetic member 613 may be disposed on one surface of the flexible printed circuit board 560 and disposed on the outer side of the base portion 750, and the second OIS coil 522 may be disposed on the other surface of the flexible printed circuit board 560 opposite to the one surface and disposed on an inner side of the base portion 750. In summary, the second OIS coil 522 may be disposed between the second OIS magnetic member 521 and the third attraction magnetic member 613.

In an embodiment, an attractive force may act between the third attraction magnetic member 613 and the second OIS magnetic member 521 disposed on the middle guide 740. In an embodiment, the middle guide 740 and the base portion 750 may be pulled toward each other through an attractive force acting between the second OIS magnetic member 521 and the third attraction magnetic member 613. Accordingly, the middle guide 740 and the base portion 750 may maintain contact with the second OIS balls b2 disposed between the third guide groove 830 and the fourth guide groove 840.

According to an embodiment, the camera module 300 may include at least one lens module facing at least one of the incident surface S1 of the reflective member R and the exit surface S2 of the reflective member R. In an embodiment, a first lens module may be disposed so as to face the incident surface S1 of the reflective member R. In an embodiment, a second lens module may be disposed so as to face the exit surface S2 of the reflective member R. In an embodiment, the first lens module and the second lens module may be at least partially coupled to the carrier 730 and may rotate with respect to the camera housing 720 together with the carrier 730 based on operation of the first OIS actuator 511, 512, the second OIS actuator 521, 522, and/or the third OIS actuator 531, 532. In an embodiment, at least one of the first lens module and the second lens module may be omitted from the camera module 700.

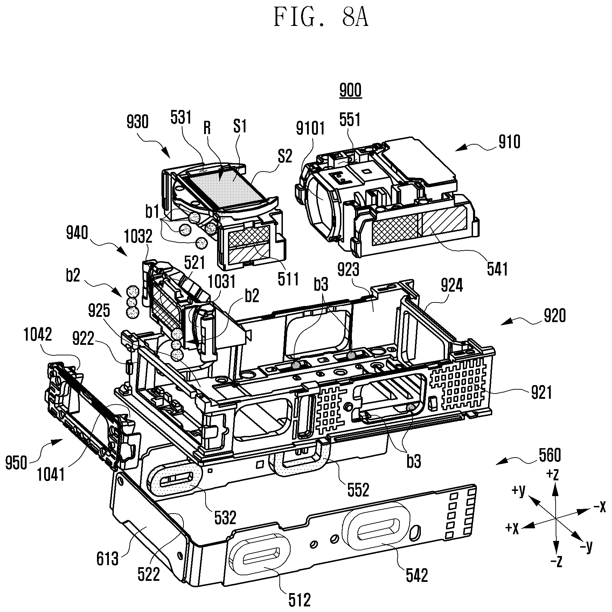

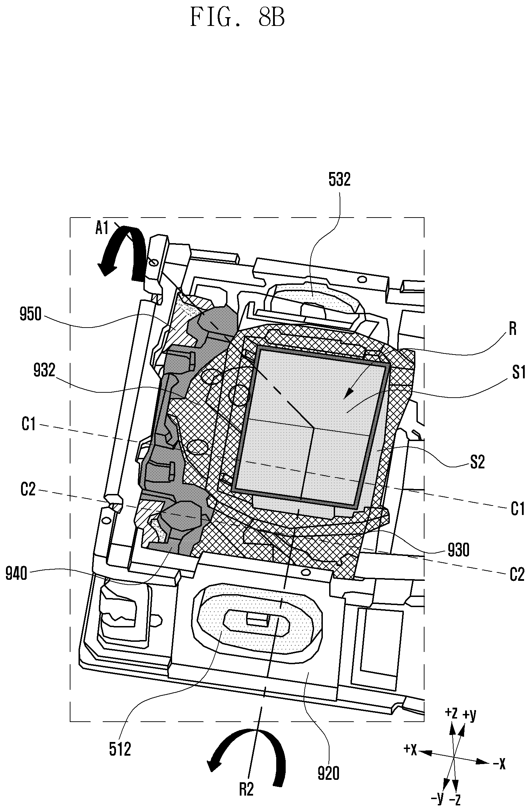

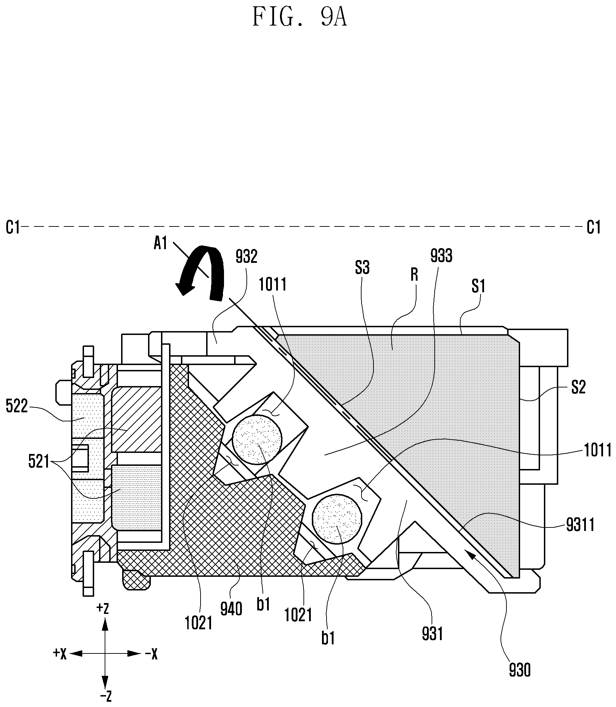

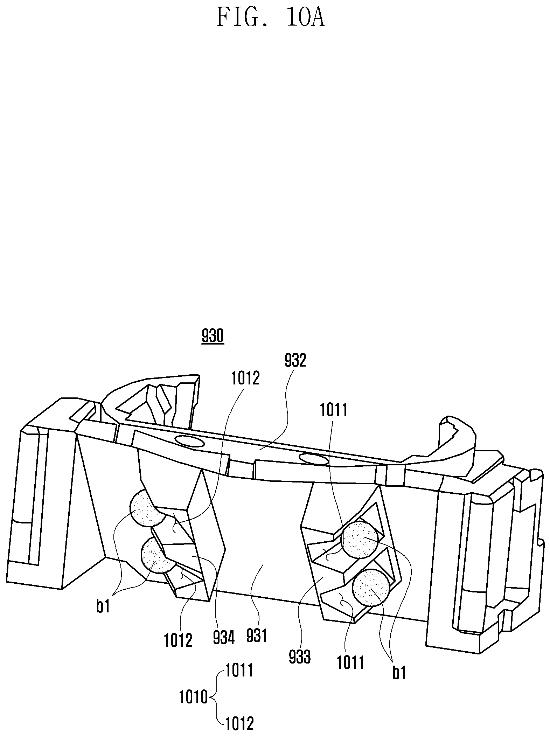

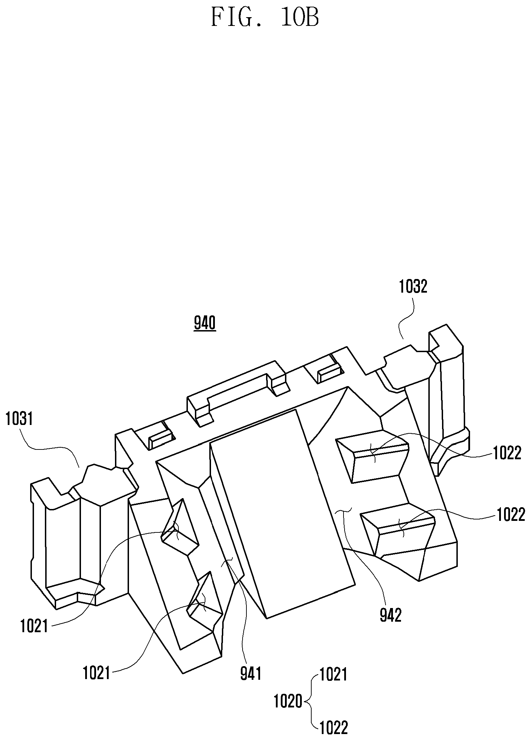

FIG. 8A is an exploded perspective view of a camera module according to an embodiment of the disclosure. FIG. 8B is a view illustrating a coupling relationship among a base portion, a middle guide, and a carrier of FIG. 8A. FIG. 9A is a cross-sectional view taken along line C1-C1 of FIG. 8B. FIG. 9B is a cross-sectional view taken along line C2-C2 of FIG. 8B. FIG. 10A is a perspective view of the carrier illustrated in FIG. 8A. FIG. 10B is a perspective view of the middle guide illustrated in FIG. 8A.

The following description may be a description of the camera module 900 according to an embodiment. Descriptions of the same or similar components as those described with reference to FIGS. 3A to 7B will be omitted.

In the following description, descriptions overlapping those described with reference to FIGS. 3A to 7B will be omitted, and portions different from those described with reference to FIGS. 3A to 7B will be described.

According to an embodiment, as illustrated in FIGS. 8A and 8B, the camera module 900 may include a camera housing 920, a reflective-system actuator, a middle guide 940, a base portion 950, a lens driver 910 (e.g., the lens driver 310 of FIG. 3A), a flexible printed circuit board 560, a first OIS actuator 511, 512, a second OIS actuator 521, 522, a third OIS actuator 531, 532, a first AF actuator 541, 542, a second AF actuator 551, 552, first OIS balls b1, second OIS balls b2, and/or AF balls b3. At least one of the above-described components may be omitted, or at least one component may be added. In an embodiment, at least one of the first OIS actuator 511, 512 and the third OIS actuator 531, 532 may be omitted.

In an embodiment, referring to FIGS. 8A and 8B, the reflective-system actuator, the middle guide 940, the base portion 950, the lens driver 910, and the image sensor 230 may be disposed in the camera housing 920. In an embodiment, the base portion 950, the middle guide 940, the reflective-system actuator, the lens driver 910, and the image sensor 230 may be disposed in the camera housing 920 in this order.

According to an embodiment, as illustrated in FIG. 8A, the lens driver 910 may include at least one lens 9101, the first AF magnetic member 541 (e.g., a magnet), and the second AF magnetic member 551 (e.g., a magnet). In an embodiment, the lens 9101 may be configured to transmit, to the image sensor 230, light that passes through the incident surface S1 of the reflective member R and is emitted from the exit surface S2 of the reflective member R. In an embodiment, the first AF magnetic member 541 may face the first AF coil 542 disposed on the first portion 921 of the camera housing 920. In an embodiment, the second AF magnetic member 551 may face the second AF coil 552 disposed on the third portion 923 of the camera housing 920.

In an embodiment, the camera module 900 may perform an auto focus (AF) function of automatically adjusting the focus of the lens 9101 with respect to a subject by moving the lens driver 910 with respect to the image sensor 230 under control of the processor 120. In an embodiment, the lens driver 910 may move with respect to the image sensor 230 along the optical axis OA of the lens 9101 (e.g., the X-axis direction of FIG. 8A) through at least one of the first AF actuator 541, 542 and the second AF actuator 551, 552.

According to an embodiment, the reflective-system actuator may be disposed in the camera housing 920 so as to be rotatable with respect to the image sensor 230. In an embodiment, the carrier 930 may be configured to rotate with respect to the camera housing 920 about an inclined axis A1 (e.g., the axis A1 of FIGS. 8B and 9A) and a second axis R2 (e.g., the Y-axis or pitch axis of FIG. 8B) through the first OIS actuator 511, 512, the second OIS actuator 521, 522, and/or the third OIS actuator 531, 532, so as to perform an optical image stabilizer (OIS) function of correcting shake occurring in the camera module 900.

According to an embodiment, as illustrated in FIGS. 8A and 8B, the camera module 900 may correct shake of an image (e.g., perform an optical image stabilizer (OIS) function) by controlling the first OIS actuator 511, 512, the second OIS actuator 521, 522, and/or the third OIS actuator 531, 532 through the processor 120. In an embodiment, the first OIS actuator 511, 512 may include a first OIS magnetic member 511 (e.g., a magnet) disposed on the carrier 930 and facing the first portion 921 of the camera housing 920, and a first OIS coil 512 disposed on the first portion 921 of the camera housing 920 so as to at least partially face the first OIS magnetic member 511 and connected to the flexible printed circuit board 560. In an embodiment, the second OIS actuator 521, 522 may include a second OIS magnetic member 521 (e.g., a magnet) disposed on the middle guide 940 and facing the second portion 922 of the camera housing 920, and a second OIS coil 522 disposed on the second portion 922 of the camera housing 920 so as to at least partially face the second OIS magnetic member 521 and connected to the flexible printed circuit board 560. In an embodiment, the third OIS actuator 531, 532 may include a third OIS magnetic member 531 (e.g., a magnet) disposed on the carrier 930 and facing the third portion 923 of the camera housing 920, and a third OIS coil 532 disposed on the third portion 923 of the camera housing 920 to at least partially face the third OIS magnetic member 531 and connected to the flexible printed circuit board 560. In addition, the first OIS actuator 511, 512, the second OIS actuator 521, 522, and the third OIS actuator 531, 532 may be changed to various configurations capable of rotating the carrier 930 with respect to the image sensor 230.

In an embodiment, referring to FIGS. 8A and 8B, the carrier 930 may include a first surface (e.g., a surface oriented in the -Y direction with reference to FIG. 8A) facing the first portion 921 of the camera housing 920, a second surface (e.g., a surface oriented in the +X direction with reference to FIG. 8A) facing the second portion 922 of the camera housing 920, and a third surface (e.g., a surface oriented in the +Y direction with reference to FIG. 8A) facing the third portion 923 of the camera housing 920. In an embodiment, the first surface and the third surface of the carrier 930 may be substantially parallel to each other. In an embodiment, the second surface of the carrier 930 may be substantially perpendicular to the first surface and the third surface. In an embodiment, the first OIS magnetic member 511 may be disposed on the first surface of the carrier 930. The third OIS magnetic member 531 may be disposed on the third surface of the carrier 930. In an embodiment, the first attraction magnetic member 1111 may be disposed on the second surface.

According to an embodiment, the first OIS actuator 511, 512 may not be limited to the first OIS magnetic member 511 disposed on the first surface of the carrier 930 and the first OIS coil 512. In an embodiment, the first OIS magnetic member 511 may be disposed on the bottom surface of the carrier 930 (e.g., the surface oriented in the -Z direction with reference to FIG. 8A) facing the support surface 925 of the camera housing 920. The first OIS coil 512 may be disposed on the support surface 925 of the camera housing 920 so as to face the first OIS magnetic member 511. In this case, the first OIS coil 512 may be a coil wound in multiple turns (e.g., a cylindrical coil). In an embodiment, through a solenoid force acting between the first OIS magnetic member 511 disposed on the bottom surface of the carrier 930 and the first OIS coil 512 disposed on the support surface 925 of the camera housing 920, the carrier 930 may rotate about the inclined axis A1 so as to correct image shake.

According to an embodiment, as illustrated in FIGS. 8A and 9A, the carrier 930 may include a seating portion 931 on which the reflective member R is disposed. In an embodiment, the seating portion 931 may include a groove having a shape corresponding to the reflective member R. In an embodiment, the seating portion 931 may include an inclined surface 9311 facing the reflective surface S3 of the carrier 930. In an embodiment, the inclined surface 9311 may be substantially parallel to the reflective surface S3. In an embodiment, the reflective surface S3 of the reflective member R may be a surface inclined at a predetermined angle with respect to a support surface 925 of the camera housing 920. The inclined surface 9311 may form a predetermined angle with the support surface 925 of the camera housing 920, as the inclined surface 9311 is parallel to the reflective surface S3.

According to an embodiment, as illustrated in FIGS. 8A, 9A, and 10B, the middle guide 940 may be at least partially disposed between the carrier 930 and a portion of the camera housing 920 (e.g., the second portion 922). The middle guide 940 may guide rotation of the carrier 930. For example, the carrier 930 may rotate about an inclined axis A1 parallel to one edge of the reflective surface S3 and inclined at a predetermined angle with respect to the support surface 925 of the camera housing 920 based on operation of the first OIS actuator 511, 512 and/or the third OIS actuator 531, 532. In an embodiment, the inclined axis A1 may be an axis parallel to the one edge of the reflective surface S3. In an embodiment, the middle guide 940 may guide rotation of the carrier 930 about the inclined axis A1.

In an embodiment, a current applied from the flexible printed circuit board 560 may flow through the first OIS coil 512 of the first OIS actuator 511, 512. As the current flows through the first OIS coil 512, a magnetic field may be formed, and the carrier 930 and the reflective member R may rotate about the inclined axis A1 through a Lorentz force acting between the first OIS coil 512 and the first OIS magnet 511.

In an embodiment, a current applied from the flexible printed circuit board 560 may flow through the third OIS coil 532 of the third OIS actuator 531, 532. As the current flows through the third OIS coil 532, a magnetic field may be formed, and the carrier 930 and the reflective member R may rotate about the inclined axis A1 through a Lorentz force acting between the third OIS coil 532 and the third OIS magnet 531.

In an embodiment, referring to FIGS. 8A, 9A, and 10B, the first guide groove 1010 formed in the carrier 930 and the second guide groove 1020 formed in the middle guide 940 may face each other. In an embodiment, first OIS balls b1, which are bearing balls guiding rotation of the carrier 930 with respect to the middle guide 940, may be disposed in the first guide groove 1010 and the second guide groove 1020. The carrier 930 may be configured to rotate about the inclined axis A1 with respect to the middle guide 940 through the first OIS balls b1.

In an embodiment, referring to FIG. 9B, the base portion 950 may be a relatively fixed object with respect to the middle guide 940. In an embodiment, the base portion 950 may be disposed on a portion of the camera housing 920 (e.g., the second portion 922) so as to face the middle guide 940. In an embodiment, the base portion 950 may guide rotation of the middle guide 940 about a second axis R2 (e.g., the Y-axis or pitch axis of FIG. 9A), the second axis R2 being parallel to one edge of the support surface 925 of the camera housing 920.

In an embodiment, the third guide groove 1030 (e.g., the (3-1)h guide groove 1031 and the (3-2)□h guide groove 1032 of FIG. 8A) formed in the middle guide 940 and the fourth guide groove 1040 (e.g., the (4-1)□h guide groove 1041 and the (4-2)□h guide groove 1042 of FIG. 8A) formed in the base portion 950 may face each other. In an embodiment, referring to FIG. 9A, the first guide groove 1010 and the second guide groove 1020 may be located in one direction perpendicular to the exit surface S2 of the reflective member R (e.g., the +X direction of FIG. 9A). In an embodiment, the third guide groove 1030 and the fourth guide groove 1040 may be formed in shapes that allow the middle guide 940 to rotate about the second axis R2 with respect to the base portion 950. For example, referring to FIGS. 8A and 9B, the third guide groove 1030 and the fourth guide groove 1040 may be portions of a virtual circle on the XZ plane, the virtual circle being perpendicular to the second axis R2. In an embodiment, the third guide groove 1030 and the fourth guide groove 1040 may have an identical curvature.

In an embodiment, the second OIS balls b2, which are bearing balls guiding rotation of the middle guide 940 with respect to the base portion 950, may be disposed in the third guide groove 1030 and the fourth guide groove 1040. The middle guide 940 may be configured to rotate about the second axis R2 with respect to the base portion 950 through the second OIS balls b2.

According to an embodiment, as illustrated in FIGS. 9A and 9B, the carrier 930 may partially cover the middle guide 940. In an embodiment, a support portion 932 of the carrier 930 may cover the middle guide 940. For example, the support portion 932 may contact the middle guide 940. In an embodiment, when the middle guide 940 rotates about the second axis R2 through operation of the second OIS actuator 521, 522, the carrier 930 may be interlocked with and move together with the middle guide 940 via the support portion 932. Accordingly, the processor 120 may correct image shake by rotating the carrier 930 and the reflective member R about the second axis R2 with respect to the image sensor 230 based on operation of the second OIS actuator 521, 522.

In an embodiment, a current applied from the flexible printed circuit board 560 may flow through the second OIS coil 522 of the second OIS actuator 521, 522. As the current flows through the second OIS coil 522, a magnetic field may be formed, and the middle guide 940 and the carrier 930 may rotate about the second axis R2 through a Lorentz force acting between the second OIS coil 522 and the second OIS magnet 521.

According to an embodiment, the inclined axis A1 may be substantially parallel to one surface of the reflective surface S3. For example, the inclined axis A1 may be substantially parallel to one edge of the reflective surface S3. In an embodiment, the inclined axis A1 and the reflective surface S3 may form an inclination of about 45 degrees with respect to the support surface 925 of the camera housing 920.

According to an embodiment, as illustrated in FIGS. 9A and 10A, the carrier 930 may include guide portions 933 and 934. In an embodiment, the guide portions 933 and 934 may be formed in a direction opposite to the reflective surface S3 of the reflective member R. For example, the guide portions 933 and 934 may extend from the seating portion 931 in a direction substantially perpendicular to the inclined surface 9311 and may extend in a direction opposite to the reflective member R. In an embodiment, the guide portions 933 and 934 may be formed to be inclined so as to form a predetermined angle with respect to the support surface 925 of the camera housing 920 in a state in which the carrier 930 is disposed in the camera housing 920. In an embodiment, the guide portions 933 and 934 may include a first guide portion 933 and a second guide portion 934. In an embodiment, the first guide portion 933 and the second guide portion 934 may be formed on a rear surface of the seating portion 931 of the carrier 930 so as to face each other.

According to an embodiment, as illustrated in FIG. 10B, the middle guide 940 may include accommodation portions 941 and 942 into which the guide portions 933 and 934 of the carrier 930 are inserted. In an embodiment, the accommodation portions 941 and 942 may be formed in shapes corresponding to the guide portions 933 and 934. In an embodiment, the accommodation portions 941 and 942 may include a first accommodation portion 941 corresponding to the first guide portion 933 and a second accommodation portion 942 corresponding to the second guide portion 934.

According to an embodiment, referring to FIGS. 9A, 10A, and 10B, the first guide groove 1010 may be formed in the guide portions 933 and 934 of the carrier 930. In an embodiment, the second guide groove 1020 may be formed in the accommodation portions 941 and 942 of the middle guide 940 and may correspond to the first guide groove 1010. In an embodiment, the first guide groove 1010 and the second guide groove 1020 may be portions of a virtual circle about the inclined axis A1. In an embodiment, the first guide groove 1010 and the second guide groove 1020 may have an identical curvature.

In an embodiment, the first OIS balls b1 may be disposed between the first guide groove 1010 and the second guide groove 1020. The carrier 930 may be configured to rotate about the inclined axis A1 with respect to the middle guide 940 through the first OIS balls b1. Accordingly, the processor may correct image shake by rotating the carrier 930 about the inclined axis A1 based on operation of the first OIS actuator 511, 512 and/or the third OIS actuator 531, 532.

According to an embodiment, as illustrated in FIGS. 9A and 10A, the first guide groove 1010 may include a (1-1)□h guide groove 1011 and a (1-2)□h guide groove 1012. In an embodiment, the (1-1)□h guide groove 1011 may be formed in the first guide portion 933 of the carrier 930. The (1-2)□h guide groove 1012 may be formed in the second guide portion 934 of the carrier 930.

According to an embodiment, as illustrated in FIGS. 9A and 10B, the second guide groove 1020 may include a (2-1)h guide groove 1021 corresponding to the (1-1)□h guide groove 1011 and a (2-2)□h guide groove 1022 corresponding to the (1-2)□h guide groove 1012. In an embodiment, the (2-1)□h guide groove 1021 may be formed in the first accommodation portion 941, and the (2-2)□h guide groove 1022 may be formed in the second accommodation portion 942.

In an embodiment, a reflection center may be an intersection point of an incident optical axis (e.g., the Z-axis of FIG. 8A) passing through the center of the incident surface S1 of the reflective member R and an exit optical axis (e.g., the X-axis of FIG. 8A) passing through the center of the exit surface S2 of the reflective member R. In an embodiment, the reflection center may be located on the reflective surface S3.

In an embodiment, the center of rotation may be an intersection point of the inclined axis A1 and the second axis R2. In an embodiment, referring to FIGS. 9A, 10A, and 10B, the first guide groove 1010 and the second guide groove 1020 may be portions of a virtual circle about the inclined axis A1. In this case, the inclined axis A1, which is a rotation axis of the carrier 930 and the reflective member R, may be located on the reflective surface S3. Accordingly, the center of rotation, which is the intersection point of the inclined axis A1 and the second axis R2, may be located on the reflective surface S3.

In an embodiment, the reflection center and the center of rotation may coincide with each other. For example, the inclined axis A1 and the second axis R2, which are rotation axes of the carrier 930 and the reflective member R, may pass through the intersection point of the reflection center. Accordingly, according to an embodiment of the disclosure, as the center of rotation of the reflective member R coincides with the reflection center of the reflective member R, an error in correction of image shake based on control of the first OIS actuator 511, 512, the second OIS actuator 521, 522, and the third OIS actuator 531, 532 may be reduced.

In an embodiment, referring to FIGS. 9A, 10A, and 10B, the (1-1)□h guide groove 1011 and the (2-1)□h guide groove 1021 of the middle guide 940 may each be formed in a shape contactable with the first OIS balls b1 at at least two surfaces. For example, the (1-1)h guide groove 1011 and the (2-1)□h guide groove 1021 may be formed as V-shaped grooves. As the (1-1)□h guide groove 1011 and the (2-1)□h guide groove 1021 are formed as V-shaped grooves, the first OIS balls b1 disposed between the (1-1)□h guide groove 1011 and the (2-1)□h guide groove 1021 may contact an inner surface of the (1-1)h guide groove 1011 and an inner surface of the (2-1)h guide groove 1021. Accordingly, the first OIS balls b1 disposed in the (1-1)□h guide groove 1011 and the (2-1)□h guide groove 1021 may substantially guide rotation of the carrier 930 in a direction of the inclined axis A1.

In an embodiment, referring to FIG. 9A, 10A, and 10B, the (1-2)□h guide groove 1012 and the (2-2)□h guide groove 1022 may be formed to have a size that allows the first OIS balls b1 to move. The guide groove formed to have a size that allows the first OIS balls b1 to move may be a U-shaped groove. In an embodiment, the first OIS balls b1 may be capable of upward/downward movement and leftward/rightward movement, in addition to rolling movement, inside the U-shaped guide groove.

In an embodiment, a distance between the (1-1)h guide groove 1011 and the (1-2)□h guide groove 1012 formed in the carrier 930 may differ from a distance between the (2-1)□h guide groove 1021 and the (2-2)□h guide groove 1022 formed in the middle guide 940 due to reasons such as a tolerance in a manufacturing process. In an embodiment, since the first OIS balls b1 located inside the U-shaped groove are movable inside the U-shaped groove, the first OIS balls b1 may compensate for a difference between the distance between the (1-1)□h guide groove 1011 and the (1-2)□h guide groove 1012 and the distance between the (2-1)□h guide groove 1021 and the (2-2)□h guide groove 1022.

According to an embodiment, as illustrated in FIG. 9B, one of the first attraction magnetic member 1111 and the second attraction magnetic member 1112 may be disposed on the seating portion 931 of the carrier 930 facing the middle guide 940. In an embodiment, the remaining one of the first attraction magnetic member 1111 and the second attraction magnetic member 1112 may be disposed on one surface of the middle guide 940 facing the carrier 930. In an embodiment, the first attraction magnetic member 1111 and the second attraction magnetic member 1112 may be magnets or magnetic metal plates (e.g., yokes). In an embodiment, an attractive force may act between the first attraction magnetic member 1111 and the second attraction magnetic member 1112. The carrier 930 and the middle guide 940 may be pulled toward each other through the attractive force acting between the first attraction magnetic member 1111 and the second attraction magnetic member 1112. Accordingly, the carrier 930 and the middle guide 940 may maintain contact with the first OIS balls b1 disposed between the first guide groove 1010 and the second guide groove 1020.

According to an embodiment, as illustrated in FIG. 8A, a third attraction magnetic member 613 may be disposed on the second portion 922 of the camera housing 920. In an embodiment, the third attraction magnetic member 613 may be a magnet or a magnetic metal plate (e.g., a yoke). In an embodiment, the third attraction magnetic member 613 may be disposed on the flexible printed circuit board 560 and may be disposed on an outer side of the base portion 950. In an embodiment, the third attraction magnetic member 613 and the second OIS coil 522 may face each other with the flexible printed circuit board 560 therebetween. For example, the third attraction magnetic member 613 may be disposed on one surface of the flexible printed circuit board 560 and disposed on the outer side of the base portion 950, and the second OIS coil 522 may be disposed on the other surface of the flexible printed circuit board 560 opposite to the one surface and disposed on an inner side of the base portion 950. In summary, the second OIS coil 522 may be disposed between the second OIS magnetic member 521 and the third attraction magnetic member 613.

In an embodiment, an attractive force may act between the third attraction magnetic member 613 and the second OIS magnetic member 521 disposed on the middle guide 940. In an embodiment, the middle guide 940 and the base portion 950 may be pulled toward each other through an attractive force acting between the second OIS magnetic member 521 and the third attraction magnetic member 613. Accordingly, the middle guide 940 and the base portion 950 may maintain contact with the second OIS balls b2 disposed between the third guide groove 1030 and the fourth guide groove 1040.

According to an embodiment, when the first OIS actuator 511, 512, the second OIS actuator 521, 522, and/or the third OIS actuator 531, 532 are not operated, the carrier 930 may be disposed in the camera housing 920 in a "default position" state. In an embodiment, the "default position" of the carrier 930 may be an original state assembled in the camera housing 920, and may be a state in which the carrier 330 does not rotate about the inclined axis A1 or the second axis R2. In an embodiment, when the carrier 930 is in the default position, the incident surface S1 of the reflective member R may be perpendicular to the Z-axis of FIG. 9A, and the exit surface S2 may be perpendicular to the X-axis of FIG. 9A.

In an embodiment, the carrier 930 may rotate about the inclined axis A1 based on operation of the first OIS actuator 511, 512 and/or the third OIS actuator 531, 532. The carrier 930 may rotate about the second axis R2 based on operation of the second OIS actuator 521, 522. In an embodiment, an intersection point of the inclined axis A1 and the second axis R2 may be the center of rotation of the carrier 930 and the reflective member R.

In an embodiment, a reflection center may be an intersection point of an incident optical axis (e.g., the Z-axis of FIG. 9A) passing through the center of the incident surface S1 of the reflective member R and an exit optical axis (e.g., the X-axis of FIG. 9A) passing through the center of the exit surface S2 of the reflective member R. In an embodiment, the reflection center may be located on the reflective surface S3. In an embodiment, the reflection center and the center of rotation may coincide with each other. In an embodiment, the inclined axis A1 and the second axis R2, which are rotation axes of the carrier 930, may pass through the reflection center. Accordingly, according to an embodiment of the disclosure, as the center of rotation of the reflective member R coincides with the reflection center of the reflective member R, an error in correction of image shake based on control of the first OIS actuator 511, 512, the second OIS actuator 521, 522, and the third OIS actuator 531, 532 may be reduced.

According to an embodiment, the camera module 300 may include at least one lens module facing at least one of the incident surface S1 of the reflective member R and the exit surface S2 of the reflective member R. In an embodiment, a first lens module may be disposed so as to face the incident surface S1 of the reflective member R. In an embodiment, a second lens module may be disposed so as to face the exit surface S2 of the reflective member R. In an embodiment, the first lens module and the second lens module may be at least partially coupled to the carrier 930 and may rotate with respect to the camera housing 920 together with the carrier 930 based on operation of the first OIS actuator 511, 512, the second OIS actuator 521, 522, and/or the third OIS actuator 531, 532. In an embodiment, at least one of the first lens module and the second lens module may be omitted from the camera module 900.

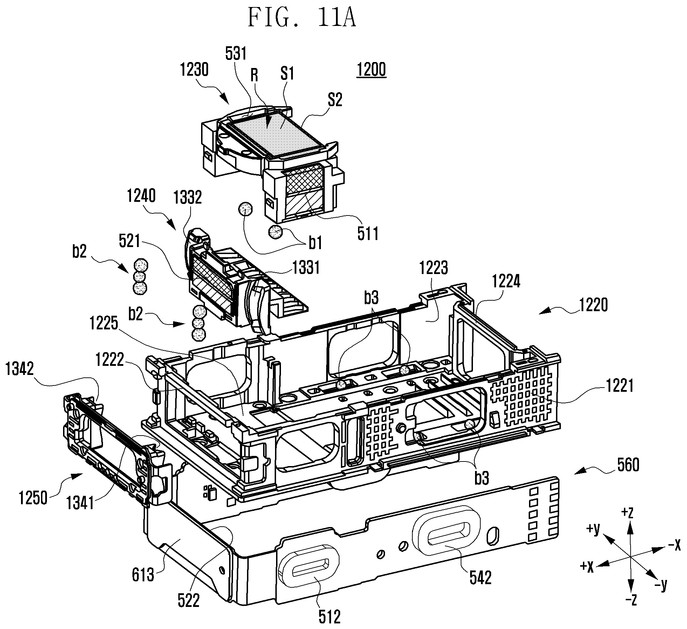

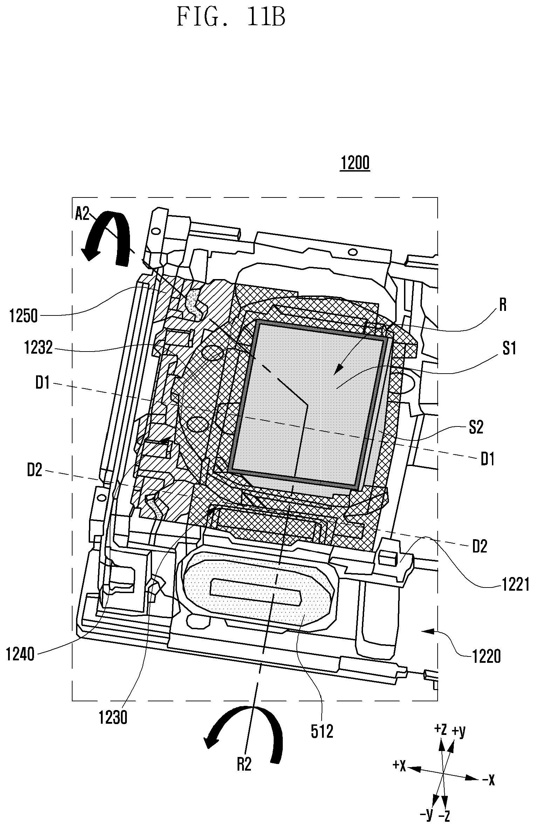

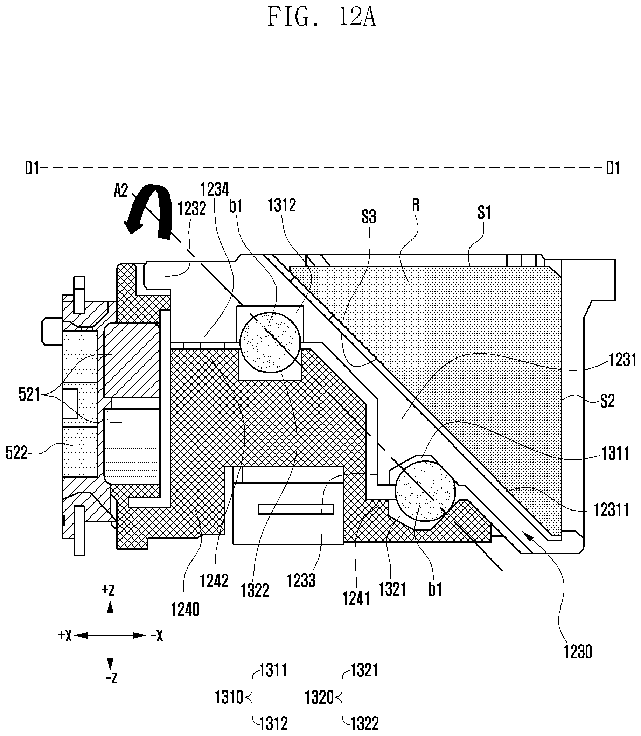

FIG. 11A is an exploded perspective view of a camera module according to an embodiment of the disclosure. FIG. 11B is a view illustrating a coupling relationship among a base portion, a middle guide, and a carrier of FIG. 11A. FIG. 12A is a cross-sectional view taken along line D1-D1 of FIG. 11B. FIG. 12B is a cross-sectional view taken along line D2-D2 of FIG. 11B.

The following description may be a description of a camera module 1200 according to an embodiment. Descriptions of the same or similar components as those described with reference to FIGS. 3A to 10B will be omitted.

In the following description, descriptions overlapping those described with reference to FIGS. 3A to 10B will be omitted, and portions different from those described with reference to FIGS. 3A to 10B will be described.

According to an embodiment, as illustrated in FIGS. 11A and 11B, the camera module 1200 may include a camera housing 1220, a reflective-system actuator, a middle guide 1240, a base portion 1250, a lens driver (e.g., the lens driver 310 of FIG. 3A or the lens driver 910 of FIG. 8A), a flexible printed circuit board 560, a first OIS actuator 511, 512, a second OIS actuator 521, 522, a third OIS actuator 531, 532, a first AF actuator 541, 542, a second AF actuator 551, 552, first OIS balls b1, second OIS balls b2, and/or AF balls b3. At least one of the above-described components may be omitted, or at least one component may be added. In an embodiment, at least one of the first OIS actuator 511, 512 and the third OIS actuator 531, 532 may be omitted.

In an embodiment, referring to FIGS. 11A and 11B, the reflective-system actuator, the middle guide 1240, the base portion 1250, the lens driver, and the image sensor 230 may be disposed in the camera housing 1220. In an embodiment, the base portion 1250, the middle guide 1240, the reflective-system actuator, the lens driver, and the image sensor 230 may be disposed in the camera housing 1220 in this order.

According to an embodiment, the camera module 1200 may include a lens driver (e.g., the lens driver 310 of FIG. 3A or the lens driver 910 of FIG. 8A). In an embodiment, the camera module 1200 may perform an auto focus (AF) function of automatically adjusting the focus of a lens (e.g., the lens 3101 of FIG. 3A or the lens 9101 of FIG. 8A) with respect to a subject by moving the lens driver with respect to the image sensor 230 under control of the processor 120. In an embodiment, the lens driver may move with respect to the image sensor 230 along the optical axis OA of the lens (e.g., the X-axis direction of FIG. 11A) through at least one of the first AF actuator 541, 542 and the second AF actuator 551, 552.

According to an embodiment, the reflective-system actuator may be disposed in the camera housing 1220 so as to be rotatable with respect to the image sensor 230. In an embodiment, the carrier 1230 may be configured to rotate with respect to the camera housing 1220 about an inclined axis A2 (e.g., the axis A2 of FIGS. 11B and 12A) and a second axis R2 (e.g., the Y-axis or pitch axis of FIG. 11B) through the first OIS actuator 511, 512, the second OIS actuator 521, 522, and/or the third OIS actuator 531, 532, so as to perform an optical image stabilizer (OIS) function of correcting shake occurring in the camera module 1200.

According to an embodiment, as illustrated in FIGS. 11A and 11B, the camera module 1200 may correct shake of an image (e.g., perform an optical image stabilizer (OIS) function) by controlling the first OIS actuator 511, 512, the second OIS actuator 521, 522, and/or the third OIS actuator 531, 532 through the processor 120. In an embodiment, the first OIS actuator 511, 512 may include a first OIS magnetic member 511 (e.g., a magnet) disposed on the carrier 1230 and facing the first portion 1221 of the camera housing 1220, and a first OIS coil 512 disposed on the first portion 1221 of the camera housing 1220 so as to at least partially face the first OIS magnetic member 511 and connected to the flexible printed circuit board 560. In an embodiment, the second OIS actuator 521, 522 may include a second OIS magnetic member 521 (e.g., a magnet) disposed on the middle guide 1240 and facing the second portion 1222 of the camera housing 1220, and a second OIS coil 522 disposed on the second portion 1222 of the camera housing 1220 so as to at least partially face the second OIS magnetic member 521 and connected to the flexible printed circuit board. In an embodiment, the third OIS actuator 531, 532 may include a third OIS magnetic member 531 (e.g., a magnet) disposed on the carrier 1230 and facing the third portion 1223 of the camera housing 1220, and a third OIS coil 532 disposed on the third portion 1223 of the camera housing 1220 to at least partially face the third OIS magnetic member 531 and connected to the flexible printed circuit board. In addition, the first OIS actuator 511, 512, the second OIS actuator 521, 522, and the third OIS actuator 531, 532 may be changed to various configurations capable of rotating the carrier 1230 with respect to the image sensor 230.

In an embodiment, referring to FIGS. 11A and 11B, the carrier 1230 may include a first surface (e.g., a surface oriented in the -Y direction of FIG. 11A) facing the first portion 1221 of the camera housing 1220, a second surface (e.g., a surface oriented in the +X direction of FIG. 11A) facing the second portion 1222 of the camera housing 1220, and a third surface (e.g., a surface oriented in the +Y direction of FIG. 11A) facing the third portion 1223 of the camera housing 1220. In an embodiment, the first surface and the third surface of the carrier 1230 may be substantially parallel to each other. In an embodiment, the second surface of the carrier 1230 may be substantially perpendicular to the first surface and the third surface. In an embodiment, the first OIS magnetic member 511 may be disposed on the first surface of the carrier 1230. The third OIS magnetic member 531 may be disposed on the third surface of the carrier 1230. In an embodiment, the first attraction magnetic member 1411 may be disposed on the second surface of the carrier 123.

According to an embodiment, the first OIS actuator 511, 512 may not be limited to the first OIS magnetic member 511 disposed on the first surface of the carrier 1230 and the first OIS coil 512. In an embodiment, the first OIS magnetic member 511 may be disposed on the bottom surface of the carrier 1230 (e.g., the surface oriented in the -Z direction with reference to FIG. 11A) facing the support surface 1225 of the camera housing 1220. The first OIS coil 512 may be disposed on the support surface 1225 of the camera housing 1220 so as to face the first OIS magnetic member 511. In this case, the first OIS coil 512 may be a coil wound in multiple turns (e.g., a cylindrical coil). In an embodiment, through a solenoid force acting between the first OIS magnetic member 511 disposed on the bottom surface of the carrier 1230 and the first OIS coil 512 disposed on the support surface 1225 of the camera housing 1220, the carrier 1230 may rotate about the inclined axis A2 so as to correct image shake.

According to an embodiment, as illustrated in FIG. 11A, the carrier 1230 may include a seating portion 1231 on which the reflective member R is disposed. In an embodiment, the seating portion 1231 may include a groove having a shape corresponding to the reflective member R. In an embodiment, the seating portion 1231 may include an inclined surface 12311 facing the reflective surface S3 of the carrier 1230. In an embodiment, the inclined surface 12311 may be substantially parallel to the reflective surface S3. In an embodiment, the reflective surface S3 of the reflective member R may be a surface inclined at a predetermined angle with respect to a support surface 1225 of the camera housing 1220. The inclined surface 12311 may form a predetermined angle with the support surface 1225 of the camera housing 1220, as the inclined surface 12311 is parallel to the reflective surface S3,.

According to an embodiment, as illustrated in FIGS. 11A, 12A, and 12B, the middle guide 1240 may be at least partially disposed between the carrier 1230 and a portion of the camera housing 1220 (e.g., the second portion 1222). The middle guide 1240 may guide rotation of the carrier 1230. For example, the carrier 1230 may rotate about an inclined axis A2 parallel to one edge of the reflective surface S3 and inclined at a predetermined angle with respect to the support surface 1225 of the camera housing 1220 based on operation of the first OIS actuator 511, 512 and/or the third OIS actuator 531, 532. In an embodiment, the inclined axis A2 may be an axis parallel to the one edge of the reflective surface S3. In an embodiment, the middle guide 1240 may guide rotation of the carrier 1230 about the inclined axis A2.

In an embodiment, a current applied from the flexible printed circuit board 560 may flow through the first OIS coil 512 of the first OIS actuator 511, 512. As the current flows through the first OIS coil 512, a magnetic field may be formed, and the carrier 1230 and the reflective member R may rotate about the inclined axis A2 through a Lorentz force acting between the first OIS coil 512 and the first OIS magnet 511.

In an embodiment, a current applied from the flexible printed circuit board 560 may flow through the third OIS coil 532 of the third OIS actuator 531, 532. As the current flows through the third OIS coil 532, a magnetic field may be formed, and the carrier 1230 and the reflective member R may rotate about the inclined axis A2 through a Lorentz force acting between the third OIS coil 532 and the third OIS magnet 531.

In an embodiment, referring to FIG. 12A, the first guide groove 1310 formed in the carrier 1230 and the second guide groove 1320 formed in the middle guide 1240 may face each other. In an embodiment, first OIS balls b1, which are bearing balls guiding rotation of the carrier 1230 with respect to the middle guide 1240, may be disposed in the first guide groove 1310 and the second guide groove 1320. The carrier 1230 may be configured to rotate about the inclined axis A2 with respect to the middle guide 1240 through the first OIS balls b1.

In an embodiment, referring to FIGS. 11A and 12B, the base portion 1250 may be a relatively fixed object with respect to the middle guide 1240. In an embodiment, the base portion 1250 may be disposed on a portion of the camera housing 1220 (e.g., the second portion 1222) so as to face the middle guide 1240. In an embodiment, the base portion 1250 may guide rotation of the middle guide 1240 about a second axis R2 (e.g., the Y-axis or pitch axis of FIG. 11A), the second axis R2 being parallel to one edge of the support surface 1225 of the camera housing 1220.

In an embodiment, referring to FIGS. 11A and 12B, the third guide groove 1330 (e.g., the (3-1)□h guide groove 1331 and the (3-2)□h guide groove 1332 of FIG. 11A) formed in the middle guide 1240 and the fourth guide groove 1340 (e.g., the (4-1)□h guide groove 1341 and the (4-2)□h guide groove 1342) formed in the base portion 1250 may face each other. In an embodiment, referring to FIG. 12A, the first guide groove 1310 and the second guide groove 1320 may be located in one direction perpendicular to the exit surface S2 of the reflective member R (e.g., the +X direction of FIG. 11A). In an embodiment, the third guide groove 1330 and the fourth guide groove 1340 may be formed in shapes that allow the middle guide 1240 to rotate about the second axis R2 with respect to the base portion 1250. For example, referring to FIG. 11A, the third guide groove 1330 and the fourth guide groove 1340 may be portions of a virtual circle on the XZ plane of FIG. 11A, the virtual circle being perpendicular to the second axis R2. In an embodiment, the third guide groove 1330 and the fourth guide groove 1340 may have an identical curvature.

In an embodiment, referring to FIG. 12B, the second OIS balls b2, which are bearing balls guiding rotation of the middle guide 1240 with respect to the base portion 1250, may be disposed in the third guide groove 1330 and the fourth guide groove 1340. The middle guide 1240 may be configured to rotate about the second axis R2 with respect to the base portion 1250 through the second OIS balls b2.

According to an embodiment, as illustrated in FIGS. 12A and 12B, the carrier 1230 may partially cover the middle guide 1240. In an embodiment, a support portion 1232 of the carrier 1230 may cover the middle guide 1240. For example, the support portion 1232 may contact the middle guide 1240. In an embodiment, when the middle guide 1240 rotates about the second axis R2 through operation of the second OIS actuator 521, 522, the carrier 1230 may be interlocked with and move together with the middle guide 1240 via the support portion 1232. Accordingly, the processor 120 may correct image shake by rotating the carrier 1230 and the reflective member R about the second axis R2 with respect to the image sensor 230 based on operation of the second OIS actuator 521, 522.

In an embodiment, a current applied from the flexible printed circuit board 560 may flow through the second OIS coil 522 of the second OIS actuator 521, 522. As the current flows through the second OIS coil 522, a magnetic field may be formed, and the carrier 1230 and the middle guide 1240 may rotate about the second axis R2 through a Lorentz force acting between the second OIS coil 522 and the second OIS magnet 521.

According to an embodiment, as illustrated in FIGS. 11A and 12A, the carrier 1230 may include a (1-1)^{th} flat portion 1233 in which the first guide groove 1310 (e.g., a (1-1)□h guide groove 1311) is formed. In an embodiment, the first flat portion 1233 may be substantially parallel to the support surface 1225 of the camera housing 1220. In an embodiment, the carrier 1230 may include a (1-2)□h flat portion 1234 in which the first guide groove 1310 (e.g., a (1-2)□h guide groove 1312) is formed and which is located in the +Z direction of FIG. 12A with respect to the (1-1)□h flat surface 1233. In an embodiment, the (1-2)^{th} flat portion 1234 may be substantially parallel to the support surface 1225 of the camera housing 1220.

In an embodiment, referring to FIGS. 11A and 12A, the middle guide 1240 may include a (2-1)□h flat portion 1241 and a (2-2)□h flat portion 1242 corresponding to the (1-1)□h flat surface 1233 and the (1-2)□h flat portion 1234. In an embodiment, the (2-2)□h flat portion 1242 may be located in the +Z direction of FIG. 12A with respect to the (2-1)□h flat portion 1241. In an embodiment, the (2-1)□h flat portion 1241 and the (2-2)□h flat portion 1242 may be substantially parallel to the support surface 1225 of the camera housing 1220. In an embodiment, the (2-1)h flat portion 1241 may face the (1-1)□h flat surface 1233. The (2-2)□h flat portion 1242 may face the (1-2)□h flat portion 1234.

According to an embodiment, as illustrated in FIG. 12A, the first OIS balls b1 may be disposed between the first guide groove 1310 formed in the carrier 1230 and the second guide groove 1320 formed in the middle guide 1240. In an embodiment, when the carrier 1230 rotates about the inclined axis A2, the rotation of the carrier 1230 may be guided through the first OIS balls b1.

In an embodiment, referring to FIG. 12A, the first guide groove 1310 may be formed in first flat portions of the carrier 1230 (e.g., the (1-1)□h flat portion 1233 and the (1-2)□h flat portion 1234). The first guide groove 1310 may include a (1-1)□h guide groove 1311 and a (1-2)□h guide groove 1312. In an embodiment, the (1-1)□h guide groove 1311 may be formed in the (1-1)h flat portion 1233 of the carrier 1230. The (1-2)□h guide groove 1312 may be formed in the (1-2)□h flat portion 1234 of the carrier 1230.

In an embodiment, referring to FIG. 12A, the second guide groove 1320 corresponding to the first guide groove 1310 may be formed in second flat portions of the middle guide 1240 (e.g., the (2-1)□h flat portion 1241 and the (2-2)□h flat portion 1242). The second guide groove 1320 may include a (2-1)□h guide groove 1321 corresponding to the (1-1)□h guide groove 1311 and formed in the (2-1)□h flat portion 1241, and a (2-2)□h guide groove 1322 corresponding to the (1-2)□h guide groove 1312 and formed in the (2-2)□h flat portion 1242.

In an embodiment, referring to FIG. 12A, the first guide groove 1310 and the second guide groove 1320 may be located in one direction perpendicular to the exit surface S2 of the reflective member R (e.g., the +X direction of FIG. 12A). In an embodiment, referring to FIG. 12A, the first guide groove 1310 and the second guide groove 1320 may be located on the inclined axis A2.

According to an embodiment, as illustrated in FIG. 12A, the carrier 1230 may rotate about the inclined axis A2 with respect to the middle guide 1240 using the first OIS balls b1 as support points. In an embodiment, the carrier 1230 and the middle guide 1240 may contact each other at at least two points through the first OIS balls b1. In an embodiment, the carrier 1230 may rotate with respect to the middle guide 1240 through the first OIS balls b1 along a virtual circle perpendicular to the inclined axis A2. In an embodiment, the carrier 1230 may be coupled to the middle guide 1240 such that movement of the carrier 1230 in directions other than rotation about the inclined axis A2 is restricted. For example, movement of the carrier 1230 in directions other than rotation about the inclined axis A2 may be restricted through a portion of the middle guide 1240.

In an embodiment, referring to FIG. 12A, the (1-1)□h guide groove 1311 and the (2-1)□h guide groove 1321 may each be formed in a shape contactable with the first OIS balls b1 at at least two surfaces. For example, the (1-1)□h guide groove 1311 and the (2-1)□h guide groove 1321 may be formed as V-shaped grooves. As the (1-1)□h guide groove 1311 and the (2-1)□h guide groove 1321 are formed as V-shaped grooves, the first OIS balls b1 disposed between the (1-1)□h guide groove 1311 and the (2-1)□h guide groove 1321 (e.g., on the first rail) may contact an inner surface of the (1-1)□h guide groove 1311 and an inner surface of the (2-1)□h guide groove 1321. Accordingly, the first OIS balls b1 disposed on the first rail may substantially guide rotation of the carrier 1230 in the direction of the inclined axis A2.

In an embodiment, referring to FIG. 12A, at least one of the (1-2)□h guide groove 1312 and the (2-2)□h guide groove 1322 may be formed to have a size that allows the first OIS balls b1 to move. The guide groove formed to have a size that allows the first OIS balls b1 to move may be a U-shaped groove. In an embodiment, the first OIS balls b1 may be capable of upward/downward movement and leftward/rightward movement, in addition to rolling movement, inside the U-shaped guide groove.

In an embodiment, the (1-2)□h guide groove 1312 may be formed as a V-shaped groove, and the (2-2)□h guide groove 1322 may be formed as a U-shaped groove. Conversely, the (1-2)□h guide groove 1312 may be formed as a U-shaped groove, and the (2-2)□h guide groove 1322 may be formed as a V-shaped groove. In an embodiment, the (1-2)□h guide groove 1312 and the (2-2)h guide groove 1322 may be formed as U-shaped grooves.

In an embodiment, a distance between the (1-1)□h guide groove 1311 and the (1-2)□h guide groove 1312 formed in the carrier 1230 may differ from a distance between the (2-1)□h guide groove 1321 and the (2-2)□h guide groove 1322 formed in the middle guide 1240 due to reasons such as a tolerance in a manufacturing process. In an embodiment, since the first OIS balls b1 located inside the U-shaped groove are movable inside the U-shaped groove, the first OIS balls b1 may compensate for a difference between the distance between the (1-1)□h guide groove 1311 and the (1-2)□h guide groove 1312 and the distance between the (2-1)□h guide groove 1321 and the (2-2)□h guide groove 1322.

According to an embodiment, as illustrated in FIG. 12B, one of the first attraction magnetic member 1411 and the second attraction magnetic member 1412 may be disposed on one surface of the carrier 1230 facing the middle guide 1240. In an embodiment, the remaining one of the first attraction magnetic member 1411 and the second attraction magnetic member 1412 may be disposed on one surface of the middle guide 1240 facing the carrier 1230. In an embodiment, the first attraction magnetic member 1411 and the second attraction magnetic member 1412 may be magnets or magnetic metal plates (e.g., yokes). In an embodiment, an attractive force may act between the first attraction magnetic member 1411 and the second attraction magnetic member 1412. The carrier 1230 and the middle guide 1240 may be pulled toward each other through the attractive force acting between the first attraction magnetic member 1411 and the second attraction magnetic member 1412. Accordingly, the carrier 1230 and the middle guide 1240 may maintain contact with the first OIS balls b1 disposed between the first guide groove 1310 and the second guide groove 1320.

According to an embodiment, as illustrated in FIGS. 11A and 12A, a third attraction magnetic member 613 may be disposed on the second portion 1222 of the camera housing 1220. In an embodiment, the third attraction magnetic member 613 may be a magnet or a magnetic metal plate (e.g., a yoke). In an embodiment, the third attraction magnetic member 613 may be disposed on the flexible printed circuit board 560 and may be disposed on an outer side of the base portion 1250. In an embodiment, the third attraction magnetic member 613 and the second OIS coil 522 may face each other with the flexible printed circuit board 560 therebetween. For example, the third attraction magnetic member 613 may be disposed on one surface of the flexible printed circuit board 560 and disposed on the outer side of the base portion 1250, and the second OIS coil 522 may be disposed on the other surface of the flexible printed circuit board 560 opposite to the one surface and disposed on an inner side of the base portion 1250. In summary, the second OIS coil 522 may be disposed between the second OIS magnetic member 521 and the third attraction magnetic member 613.

In an embodiment, an attractive force may act between the third attraction magnetic member 613 and the second OIS magnetic member 521 disposed on the middle guide 1240. In an embodiment, the middle guide 1240 and the base portion 1250 may be pulled toward each other through an attractive force acting between the second OIS magnetic member 521 and the third attraction magnetic member 613. Accordingly, the middle guide 1240 and the base portion 1250 may maintain contact with the second OIS balls b2 disposed between the third guide groove 1330 and the fourth guide groove 1340.

According to an embodiment, the camera module 300 may include at least one lens module facing at least one of the incident surface S1 of the reflective member R and the exit surface S2 of the reflective member R. In an embodiment, a first lens module may be disposed so as to face the incident surface S1 of the reflective member R. In an embodiment, a second lens module may be disposed so as to face the exit surface S2 of the reflective member R. In an embodiment, the first lens module and the second lens module may be at least partially coupled to the carrier 1230 and may rotate with respect to the camera housing 1220 together with the carrier 1230 based on operation of the first OIS actuator 511, 512, the second OIS actuator 521, 522, and/or the third OIS actuator 531, 532. In an embodiment, at least one of the first lens module and the second lens module may be omitted from the camera module 1200.

A camera module may enable high magnification using refraction of light. For example, a camera module (e.g., the camera module 300 of FIG. 3A, the camera module 700 of FIG. 7A, the camera module 900 of FIG. 8A, or the camera module 1200 of FIG. 11A) may include a reflective member (e.g., the reflective member R) such as a prism or a mirror. Light incident on the reflective member R may be transmitted to an image sensor (e.g., the image sensor 230 of FIG. 2) with a path of the light bent through reflection or refraction.

A camera module using the reflective member R may include, inside a camera housing, a base portion (e.g., the base portion 350 of FIG. 3A, the base portion 750 of FIG. 7A, the base portion 950 of FIG. 8A, or the base portion 1250 of FIG. 11A), a middle guide (e.g., the middle guide 340 of FIG. 3A, the middle guide 740 of FIG. 7A, the middle guide 940 of FIG. 8A, or the middle guide 1240 of FIG. 11A), a reflective-system actuator, a lens driver (e.g., the lens driver 310 of FIG. 3A or the lens driver 910 of FIG. 8A), and the image sensor 230.

The reflective-system actuator may include the reflective member R and a carrier (e.g., the carrier 330 of FIG. 3A, the carrier 730 of FIG. 7A, the carrier 930 of FIG. 8A, or the carrier 1230 of FIG. 11A). In order to correct shake of an image formed on the image sensor 230 due to hand shake, the reflective member R may be tilted with respect to the image sensor 230. For example, the carrier 330 on which the reflective member R is disposed may rotate, with respect to the image sensor 230, about one of a roll axis (e.g., the Z-axis of FIG. 3B) and a pitch axis (e.g., the Y-axis of FIG. 3B) through an actuator (e.g., a coil and a magnet). The middle guide 340, 740, 940, or 1240 may rotate, with respect to the image sensor 230, about the remaining one of the roll axis and the pitch axis through the actuator. The carrier 330, 730, 930, or 1230 may be interlocked with the middle guide 340, 740, 940, or 1240 and may rotate in the same direction as the rotation direction of the middle guide 340, 740, 940, or 1240.

Meanwhile, when the reflective-system actuator rotates about the roll axis, a gap for rotation of the carrier 330, 730, 930, or 1230 about the roll axis may be required between the carrier 330, 730, 930, or 1230 and the middle guide 340, 740, 940, or 1240. The camera module 300, 700, 900, or 1200 may have a limitation in reducing a size of the gap between the carrier 330, 730, 930, or 1230 and the middle guide 340, 740, 940, or 1240. Further, when the reflective-system actuator rotates about the roll axis to correct image shake, a smile effect, which is an image rotation phenomenon, may occur.

According to an embodiment of the disclosure, a camera module 300 or 700 (e.g., the camera module 300 of FIG. 3A or the camera module 700 of FIG. 6A) may include a camera housing 320 or 720 including a first portion 321 or 721 and a second portion 322 or 722 perpendicular to the first portion. The camera module may include a reflective member R including an incident surface S1 and an exit surface S2 perpendicular to the incident surface. The camera module may include a carrier 330 or 730 including a seating portion on which the reflective member is disposed, and a first guide groove 410 or 810 opposite to the reflective member and facing the second portion. The camera module may include a middle guide 340 or 740 at least partially disposed between the carrier and the second portion of the camera housing, and including a second guide groove 420 or 820 corresponding to the first guide groove and a third guide groove 430 or 830 facing the second portion. The camera module may include a base portion 350 or 750 disposed on the second portion and including a fourth guide groove 440 or 840 corresponding to the third guide groove. The camera module may include a first OIS ball b1 positioned between the first guide groove and the second guide groove. The camera module may include a second OIS ball b2 positioned between the third guide groove and the fourth guide groove. The camera module may include a first OIS magnetic member 511 disposed on the carrier and facing the first portion. The camera module may include a second OIS magnetic member 521 disposed on the middle guide and facing the second portion. The camera module may include a first OIS coil 512 disposed on the first portion and facing the first OIS magnetic member. The camera module may include a second OIS coil 522 disposed on the second portion and facing the second OIS magnetic member.

The carrier may rotate about a first axis R1 perpendicular to the exit surface through an electromagnetic force acting between the first OIS magnetic member and the first OIS coil. The carrier may rotate about a second axis R2 perpendicular to the first axis and an axis perpendicular to the incident surface of the reflective member through an electromagnetic force acting between the second OIS magnetic member and the second OIS coil.

The first axis and the second axis may pass through an intersection point of an incident optical axis perpendicular to the incident surface and passing through the center of the incident surface, and an exit optical axis perpendicular to the exit surface and passing through the center of the exit surface.

The first guide groove may include a (1-1)h guide groove 411 or 811 and a (1-2)□h guide groove 412 or 812 opposite to the (1-1)□h guide groove. The second guide groove may include a (2-1)h guide groove 421 or 821 corresponding to the (1-1)□h guide groove and a (2-2)□h guide groove 422 or 822 corresponding to the (1-2)□h guide groove. The first guide groove and the second guide groove may be portions of a virtual circle perpendicular to the first axis R1 perpendicular to the exit surface.

The first guide groove and the second guide groove may be formed to have the same curvature.

The carrier and the middle guide may each be supported at at least three points through the first OIS ball.

At least two first OIS balls may be disposed between the (1-1)h guide groove and the (2-1)□h guide groove. One first OIS ball may be disposed between the (1-2)□h guide groove and the (2-2)□h guide groove.

The first OIS magnetic member may include a (1-1)□h OIS magnetic member 511a and a (1-2)h OIS magnetic member 511b respectively disposed in a thickness direction of the camera module.

The (1-1)□h OIS magnetic member and the (1-2)□h OIS magnetic member may have different poles facing the camera housing.

The camera module may include a first attraction magnetic member 611 disposed on one of the carrier and the middle guide. The camera module may include a second attraction magnetic member 612 disposed on the remaining one of the carrier and the middle guide so as to face the first attraction magnetic member.

The camera module may further include a third attraction magnetic member 613 disposed on the second portion of the camera housing and facing the second OIS magnetic member.

The second OIS coil may be disposed between the second OIS magnetic member and the third attraction magnetic member.

The camera module may further include a lens driver 310 including a lens 3101 through which light passing through the exit surface of the reflective member is transmitted.

The camera module may further include an AF magnetic member 541 or 551 disposed on the lens driver.

The camera module may further include an AF coil 542 or 552 facing the AF magnetic member and configured such that an electromagnetic force acts with the AF magnetic member so that the lens driver moves in an optical axis direction of the lens of the lens driver.

The camera module may further include an AF ball b3 disposed between the camera housing and the lens driver.

The camera module may further include at least one lens module disposed on the carrier and facing at least one of the incident surface S1 of the reflective member and the exit surface S2 of the reflective member.

According to an embodiment of the disclosure, a camera module 900 or 1200 (e.g., the camera module 900 of FIG. 8A or the camera module 1200 of FIG. 11A) may further include a camera housing 920 or 1200 including a first portion 921 or 1221 and a second portion 922 or 1222 perpendicular to the first portion. The camera module may include a reflective member R including an incident surface S1, an exit surface S2 perpendicular to the incident surface, and a reflective surface S3 connecting the incident surface and the exit surface and inclined at a predetermined angle with respect to a support surface 1225 of the camera housing. The camera module may include a carrier 930 or 1230 including a seating portion on which the reflective member R is disposed. The camera module may include a middle guide 940 or 1240 disposed on the camera housing and at least partially facing the seating portion. The camera module may include a first OIS ball b1 disposed between the carrier and the middle guide. The camera module may include a first OIS magnetic member 511 disposed on the carrier and facing the first portion. The camera module may include a first OIS coil 512 disposed on the first portion and facing the first OIS magnetic member. The carrier may be configured to rotate, through an electromagnetic force acting between the first OIS magnetic member and the first OIS coil, about an inclined axis A1 or A2 parallel to one edge of the reflective surface and inclined at a predetermined angle with respect to the support surface of the camera housing.

The camera module may further include a base portion 950 or 1250 disposed on the second portion of the camera housing. The camera module may further include a second OIS ball b2 disposed between the middle guide and the base portion. The camera module may further include a second OIS magnetic member 521 disposed on the middle guide and facing the second portion. The camera module may further include a second OIS coil 522 disposed on the second portion and facing the second OIS magnetic member.

The carrier may be configured to rotate about a second axis R2 perpendicular to an axis perpendicular to the incident surface of the reflective member and an axis perpendicular to the exit surface of the reflective member through an electromagnetic force acting between the second OIS magnetic member and the second OIS coil.

The inclined axis and the reflective surface of the reflective member may be inclined at 45 degrees with respect to the support surface of the camera housing.

The inclined axis and the second axis may pass through an intersection point of an incident optical axis perpendicular to the incident surface and passing through the center of the incident surface, and an exit optical axis perpendicular to the exit surface and passing through the center of the exit surface.

The carrier may include a seating portion 931 or 1231 on which the reflective member is disposed and which forms a predetermined angle with respect to the support surface of the camera housing so as to be parallel to the reflective surface, guide portions 933 and 934 extending from the seating portion in a direction opposite to the reflective surface, and a first guide groove 1010 formed in the guide portions, wherein the first OIS ball is disposed in the first guide groove. The middle guide may include accommodation portions 941 and 942 in which the guide portions are at least partially accommodated, and a second guide groove 1020 formed in the accommodation portions, corresponding to the first guide groove, wherein the first OIS ball is disposed in the second guide groove.

The camera module may include a first attraction magnetic member 1111 disposed on one of a surface of the seating portion on which the guide portions are formed and a surface of the middle guide facing the seating portion. The camera module may include a second attraction magnetic member 1112 disposed on the remaining one of the surface of the seating portion on which the guide portions are formed and the surface of the middle guide facing the seating portion.

The camera module may include a first attraction magnetic member 1411 disposed on one of the carrier and the middle guide. The camera module may include a second attraction magnetic member 1412 disposed on the remaining one of the carrier and the middle guide so as to face the first attraction magnetic member.

The camera module may further include a third attraction magnetic member 613 disposed on the second portion of the camera housing and facing the second OIS magnetic member. The second OIS coil may be disposed between the second OIS magnetic member and the third attraction magnetic member.

According to various embodiments disclosed herein, a carrier 330, 730, 930, or 1230 on which a reflective member R is disposed may be configured to rotate, with respect to an image sensor 230, about a yaw axis (e.g., R1 of FIG. 3B or the X-axis of FIG. 3B) and a pitch axis (e.g., R2 of FIG. 3B or the Y-axis of FIG. 3B) through an actuator (e.g., a coil and a magnet). When a reflective-system actuator rotates about the yaw axis, a gap between the middle guide 340, 740, 940, or 1240 and the carrier 330, 730, 930, or 1230 may be reduced, compared with a case in which a reflective-system actuator rotates about a roll axis. Accordingly, as a result of a gap between components disposed inside a camera housing (e.g., the camera housing 320 of FIG. 3A, the camera housing 720 of FIG. 7A, the camera housing 920 of FIG. 8A, or the camera housing 1220 of FIG. 11A) being reduced, the size of a camera module 300, 700, 900, or 1200 may be reduced.

Further, when the reflective-system actuator rotates about the yaw axis, image rotation occurring during image-shake correction may be reduced, compared with a case in which the reflective-system actuator rotates about a roll axis (e.g., the Z-axis of FIG. 3B).

Advantageous effects obtainable from the disclosure are not limited to the above-mentioned advantageous effects, and other advantageous effects not mentioned herein will be clearly understood by those skilled in the art from the following description.

According to various embodiments disclosed herein, the electronic device 101 may have an appearance of a bar type or a plate type, but is not limited thereto. For example, the illustrated electronic device 101 may be a part of a foldable electronic device, a slidable electronic device, a stretchable electronic device, and/or a rollable electronic device. The term "foldable electronic device," "slidable electronic device," "stretchable electronic device," and/or "rollable electronic device" may refer to an electronic device in which a display (e.g., the display module 160 of FIG. 1) is bendable so that at least a portion of the display may be folded, wound or rolled, at least partially expanded in area, and/or accommodated inside a housing. The foldable electronic device, the slidable electronic device, the stretchable electronic device, and/or the rollable electronic device may be used by expanding a screen display region according to a user's need, by unfolding the display or by exposing a wider area of the display to the outside.

The electronic device 101 according to various embodiments of the disclosure may be one of various types of devices. The electronic device 101 may include, for example, a portable communication device (e.g., smartphone), a computer device, a portable multimedia device, a portable medical device, a camera, a wearable device, or a home appliance. The electronic device according to embodiments of the disclosure are not limited to those described above.

It is to be understood that various embodiments of the disclosure and terms for describing the embodiments are not intended to limit the technical features disclosed herein to specific embodiments, and that the embodiments include various modifications, equivalents, or substitutions of the corresponding embodiments. In relation to the description of the drawings, similar reference numerals may be used for similar or related components. The singular form of a noun corresponding to an item may include one item or a plurality of items unless the context clearly indicates otherwise. In the disclosure, each of phrases, such as "A or B," "at least one of A and B," "at least one of A or B," "A, B, or C," "at least one of A, B, and C," and "at least one of A, B, or C" may include any one of the items listed together in the corresponding phrase or all possible combinations of the items. Such terms as "a first", "a second", "the first", and "the second" may be used to simply distinguish a corresponding element from another, and does not limit the elements in other aspect (e.g., importance or order). When a certain (e.g., a first) component is mentioned as being "coupled" or "connected" to another (e.g., a second) component, with or without a term "functionally" or "communicatively," it means that the certain component may be connected to the other component directly (e.g., wiredly), wirelessly, or via a third component.

The term "module" used in various embodiments of the disclosure may include a unit implemented in hardware, software, or firmware, and may be used interchangeably with terms such as "logic," "logic block," "component," "circuit," or the like. The module may be an integrally configured component or a minimum unit or a portion of the component, which performs one or more functions. For example, according to an embodiment, the module may be implemented in the form of an application-specific integrated circuit (ASIC).

Various embodiments disclosed herein may be implemented by software (e.g., the program 140) including one or more instructions stored in a storage medium (e.g., internal memory 136 or external memory 138) readable by a machine (e.g., an electronic device 101). For example, a processor (e.g., the processor 120) of a device (e.g., the electronic device 101) may invoke and execute at least one of the stored one or more instructions from the storage medium. This enables the device to be operated to perform at least one function in response to the at least one invoked instruction. The one or more instructions may include codes generated by a compiler or code capable of being executed by an interpreter. The machine-readable storage medium may be provided in the form of a non-transitory storage medium. Here, the term "non-transitory" merely means that the storage medium is a tangible device and does not contain a signal (e.g., electromagnetic waves), and this term is not intended to distinguish a case where data is permanently stored on the storage medium and a case where data is temporarily stored.

According to an embodiment, a method according to various embodiments set forth herein may be included and provided in a computer program product. The computer program product may be traded as a product between a seller and a purchaser. The computer program product may be distributed in the form of a machine-readable storage medium (e.g., a compact disc read-only memory (CD-ROM)), or may be directly distributed through an application store (e.g., Play StoreT^{M}) or directly between two user devices (e.g., smartphones), or may be distributed online (e.g., downloaded or uploaded). In the case of online distribution, at least part of the computer program product may be temporarily stored or produced in a machine-readable storage medium such as a manufacturer's server, a server of an application store, or the memory of a relay server.

According to various embodiments, each component (e.g., a module or a program) of the above-described components may include a single entity or multiple entities, and some of the multiple entities may be separately disposed in different components. According to various embodiments, one or more of the components or operations described above may be omitted, or one or more other components or operations may be added. Alternatively, or additionally, multiple components (e.g., modules or programs) may be integrated into a single component. In such a case, the integrated element may perform one or more functions of each of the plurality of elements in the same or similar manner as they are performed by a corresponding one of the plurality of elements before the integration. According to various embodiments, operations performed by the module, the program, or another element may be carried out sequentially, in parallel, repeatedly, or heuristically, or one or more of the operations may be executed in a different order or omitted, or one or more other operations may be added.

It will be appreciated that, in addition to the embodiments set forth herein, the disclosure also considers and includes embodiments based on any combination of two or more of the embodiments set forth herein and embodiments including any combination of the above-described features. They are disclosed herein. That is, the absence of an explicit indication that two features may be combined or two embodiments may be combined does not mean that such combinations are not contemplated, but such combinations should be considered to be included herein.

## Claims

1. A camera module (300, 700) comprising:
a camera housing (320, 720) comprising a first portion (321, 721) and a second portion (322, 722) perpendicular to the first portion;
a reflective member (R) comprising an incident surface (S1) and an exit surface (S2) perpendicular to the incident surface;
a carrier (330, 730) comprising a seating portion on which the reflective member is disposed, and a first guide groove (410, 810) opposite to the reflective member and facing the second portion;
a middle guide (340, 740) at least partially disposed between the carrier and the second portion of the camera housing, and comprising a second guide groove (420, 820) corresponding to the first guide groove, and a third guide groove (430, 830) facing the second portion;
a base portion (350, 750) disposed on the second portion, and comprising a fourth guide groove (440, 840) corresponding to the third guide groove;
a first OIS ball (b1) positioned between the first guide groove and the second guide groove;
a second OIS ball (b2) positioned between the third guide groove and the fourth guide groove;
a first OIS magnetic member (511) disposed on the carrier and facing the first portion;
a second OIS magnetic member (521) disposed on the middle guide and facing the second portion;
a first OIS coil (512) disposed on the first portion and facing the first OIS magnetic member; and
a second OIS coil (522) disposed on the second portion and facing the second OIS magnetic member.

2. The camera module of claim 1, wherein the carrier is configured to:
rotate about a first axis (R1) perpendicular to the exit surface through an electromagnetic force acting between the first OIS magnetic member and the first OIS coil; and
rotate about a second axis (R2) perpendicular to the first axis and an axis perpendicular to the incident surface of the reflective member through an electromagnetic force acting between the second OIS magnetic member and the second OIS coil, and
wherein the first axis and the second axis pass through an intersection point of an incident optical axis perpendicular to the incident surface and passing through a center of the incident surface, and an exit optical axis perpendicular to the exit surface and passing through a center of the exit surface.

3. The camera module of claim 1, wherein the first guide groove comprises a (1-1)h guide groove (411, 811) and a (1-2)□h guide groove (412, 812) opposite to the (1-1)□h guide groove,
wherein the second guide groove comprises a (2-1)□h guide groove (421, 821) corresponding to the (1-1)□h guide groove and a (2-2)□h guide groove (422, 822) corresponding to the (1-2)□h guide groove, and
wherein the first guide groove and the second guide groove are portions of a virtual circle perpendicular to the first axis (R1) perpendicular to the exit surface.

4. The camera module of claim 3, wherein the first guide groove and the second guide groove have an identical curvature.

5. The camera module of claim 1, wherein the carrier and the middle guide are each supported at at least three points through the first OIS ball.

6. The camera module of claim 3, wherein at least two first OIS balls are disposed between the (1-1)□h guide groove and the (2-1)□h guide groove, and
wherein one first OIS ball is disposed between the (1-2)□h guide groove and the (2-2)□h guide groove.

7. The camera module of claim 1, wherein the first OIS magnetic member comprises a (1-1)□h OIS magnetic member (511a) and a (1-2)□h OIS magnetic member (511b) respectively disposed in a thickness direction of the camera module, and
wherein the (1-1)□h OIS magnetic member and the (1-2)□h OIS magnetic member have different poles facing the camera housing.

8. The camera module of claim 1, further comprising:
a first attraction magnetic member (611) disposed on one of the carrier and the middle guide; and
a second attraction magnetic member (612) disposed on a remaining one of the carrier and the middle guide so as to face the first attraction magnetic member.

9. The camera module of claim 1, further comprising:
a third attraction magnetic member (613) disposed on the second portion of the camera housing and facing the second OIS magnetic member,
wherein the second OIS coil is disposed between the second OIS magnetic member and the third attraction magnetic member.

10. The camera module of claim 1, further comprising:
a lens driver (310) comprising a lens (3101) through which light passing through the exit surface of the reflective member is transmitted;
an AF magnetic member (541, 551) disposed on the lens driver;
an AF coil (542, 552) facing the AF magnetic member and configured such that an electromagnetic force acts between the AF magnetic member and the AF coil so that the lens driver moves in an optical axis direction of the lens of the lens driver; and
an AF ball (b3) disposed between the camera housing and the lens driver.

11. The camera module of claim 10, further comprising:
at least one lens module disposed on the carrier and facing at least one of an incident surface (S1) of the reflective member and an exit surface (S2) of the reflective member.

12. A camera module (900, 1200) comprising:
a camera housing (920, 1200) comprising a first portion (921, 1221) and a second portion (922, 1222) perpendicular to the first portion;
a reflective member (R) comprising an incident surface (S1), an exit surface (S2) perpendicular to the incident surface, and a reflective surface (S3) connecting the incident surface and the exit surface and inclined at a predetermined angle with respect to a support surface (1225) of the camera housing;
a carrier (930, 1230) comprising a seating portion on which the reflective member is disposed;
a middle guide (940, 1240) disposed on the camera housing, at least a portion of the middle guide facing the seating portion;
a first OIS ball (b1) disposed between the carrier and the middle guide;
a first OIS magnetic member (511) disposed on the carrier and facing the first portion; and
a first OIS coil (512) disposed on the first portion and facing the first OIS magnetic member,
wherein the carrier is configured to rotate, through an electromagnetic force acting between the first OIS magnetic member and the first OIS coil, about an inclined axis (A1, A2) parallel to one edge of the reflective surface and inclined at a predetermined angle with respect to the support surface of the camera housing.

13. The camera module of claim 12, further comprising:
a base portion (950, 1250) disposed on the second portion of the camera housing;
a second OIS ball (b2) disposed between the middle guide and the base portion;
a second OIS magnetic member (521) disposed on the middle guide and facing the second portion; and
a second OIS coil (522) disposed on the second portion and facing the second OIS magnetic member,
wherein the carrier is configured to rotate, through an electromagnetic force acting between the second OIS magnetic member and the second OIS coil, about a second axis (R2) perpendicular to an axis perpendicular to an incident surface of the reflective member and an axis perpendicular to an exit surface of the reflective member.

14. The camera module of claim 12, wherein the inclined axis and the reflective surface of the reflective member are inclined at 45 degrees with respect to the support surface of the camera housing.

15. The camera module of claim 12, wherein the carrier comprises a seating portion (931, 1231) on which the reflective member is disposed and which forms a predetermined angle with respect to the support surface of the camera housing so as to be parallel to the reflective surface, guide portions (933, 934) extending from the seating portion in a direction opposite to the reflective surface, and a first guide groove (1010) formed in the guide portions, wherein the first OIS ball is disposed in the first guide groove,
wherein the middle guide comprises accommodation portions (941, 942) in which the guide portions are at least partially accommodated, and a second guide groove (1020) formed in the accommodation portions, corresponding to the first guide groove, wherein the first OIS ball is disposed in the second guide groove, and
wherein the camera module further comprises:
a first attraction magnetic member (1111) disposed on one of a surface of the seating portion on which the guide portions are formed and a surface of the middle guide facing the seating portion; and
a second attraction magnetic member (1112) disposed on a remaining one of the surface of the seating portion on which the guide portions are formed and the surface of the middle guide facing the seating portion.
